# EUROPEAN PATENT SPECIFICATION

(11) **EP 2 182 462 B1**
(45) Date of publication and mention of the grant of the patent: **22.02.2017**
(21) Application number: 09013617.7
(22) Date of filing: 29.10.2009
(51) Int. Cl.: G06F 21/78

(54) **Information processing system, information processing apparatus, information processsing method, and storage medium**
Informationsverarbeitungssystem, Informationsverarbeitungsvorrichtung, Informationsverarbeitungsverfahren und Speichermedium
Système de traitement d'informations, appareil de traitement d'informations, procédé de traitement d'informations et support de stockage

(30) Priority: 29.10.2008 JP 2008277730
(43) Date of publication of application: 05.05.2010
(73) Proprietor: Kurimoto, Shinji, Minami-ku Kyoto-shi, Kyoto (JP); Kuwahara, Masato, Kyoto-shi, Kyoto (JP)
(72) Inventor: Kurimoto, Shinji, Minami-ku Kyoto-shi, Kyoto (JP); Kuwahara, Masato, Kyoto-shi, Kyoto (JP)
(74) Representative: Lang, Johannes

(56) References cited:
- EP-A- 1 313 108
- EP-A- 1 376 300
- EP-A- 1 471 408
- US-A1- 2005 018 472
- US-B1- 6 804 730

## Description

### BACKGROUND OF THE INVENTION

### Field of the invention

The present invention relates to an information processing system, an information processing apparatus, an information processing method, and a storage medium. More specifically, the present invention relates to an information processing system, an information processing apparatus, an information processing method, and a storage medium which utilize a secure semiconductor memory.

### Description of the related art

One example of a background art is disclosed in Patent Document 1 (Japanese Patent Application Laid-Open No. 2006-146608 [G06F 21/24, G11C 16/02]). According to the Patent Document 1, the information processing apparatus generates key data by utilizing encryption original data read from a semiconductor memory and encryption generation data stored inside itself, and temporarily stores the key data in a storing portion. The information processing apparatus transmits data encrypted by utilizing the key data to the semiconductor memory, and the semiconductor memory, receiving the data, executes a command decrypted by utilizing the similarly key data. This makes it possible to make a data communication only between the predetermined semiconductor memory and the information processing apparatus.

However, in a case that a key the same as the key used in the predetermined semiconductor memory (referred to as "semiconductor memory X", for the sake of convenience of description) for the information processing apparatus ("information processing apparatus A", for the sake of convenience of description) of the Patent Document 1 is utilized in another semiconductor memory Y for another information processing apparatus B being compatible with the information processing apparatus A, if the key is known to others, security of both of the semiconductor memory X and the semiconductor memory Y may be lost. In order to avoid this, if a security function, such as using different keys between the semiconductor memory X and the semiconductor memory Y with the information processing apparatus B and the information processing apparatus A compatible with each other, is provided, the costs relating to the development is huge, such as long time and large costs for the development.

### SUMMARY OF THE INVENTION

Therefore, it is a primary object of the present invention to provide a novel information processing system, a novel information processing apparatus, a novel information processing method, and a novel storage medium.

Another object of the present invention is to provide an information processing system, an information processing apparatus, an information processing method, and a storage medium which are able to ensure high security with costs related to the development kept as low as possible.

The present invention employs following features in order to solve the above-described problems. It should be noted that reference numerals and the supplements inside the parentheses show one example of a corresponding relationship with the embodiments described later for easy understanding of the present invention, and do not limit the present invention.

An information processing system having a first information processing apparatus and a first storage medium capable of being attached to and detached from the first information processing apparatus is characterized by comprising a second information processing apparatus being compatible with the first information processing apparatus and detachable with the first storage medium, and a second storage medium capable of being attached to and detached from at least the second information processing apparatus and being different from the first storage medium. The first information processing apparatus comprises: a first issuing means for encrypting a content mode shifting command to shift to a content mode allowing access to content data stored in the attached storage medium by utilizing first key data, and issuing the same to the storage medium; and a first receiving means for issuing a reading command to the attached storage medium by executing a first predetermined program, and receiving read data output from the storage medium, the first storage medium comprises: a first key data memory area for storing the first key data; a first content data memory area for storing first content data; and a first controller for, when the encrypted content mode shifting command from the attached information processing apparatus is received, shifting to the content mode by decrypting the encrypted content mode shifting command by utilizing the first key data and executing the same, and for, when the reading command with respect to the content memory area is received from the attached information processing apparatus, not responding to the reading command before shifting to the content mode and outputting the read data to the information processing apparatus after shifting to the content mode, the second information processing apparatus comprises: a medium determining means for determining whether the attached storage medium is the first storage medium or the second storage medium; a second issuing means for, when the medium determining means determines to be the first storage medium, encrypting a content mode shifting command to sift to the content mode by utilizing the first key data and issuing the same to the first storage medium, and for, when the medium determining means determines to be the second storage medium, encrypting the content mode shifting command to shift to the content mode by utilizing second key data different from the first key data and issuing the same to the second storage medium; and a second receiving means for issuing a reading command to the attached storage medium by executing a second predetermined program different from the first predetermined program, and receiving read data output from the storage medium, and the second storage medium compromises: a second key data memory area for storing the second key data; a second content data memory area for storing second content data; and a second controller for, when the encrypted content mode shifting command is received from the attached second information processing apparatus, shifting to the content mode by decrypting the encrypted content mode shifting command by utilizing the second key data and executing the same, and for, when the reading command with respect to the content data memory area is received from the attached second information processing apparatus, not responding to the reading command before shifting to the content mode, and outputting read data to the second information processing apparatus after shifting to the content mode.

In the first invention, an information processing system (10) has a first information processing apparatus (12), a second information processing apparatus (14) being compatible with the first information processing apparatus, a first storage medium (16) capable of being attached to and detached from the first information processing apparatus and the second information processing apparatus, and a second storage medium (18) capable of being attached to and detached from at least the second information processing apparatus and being different from the first storage medium.

The first information processing apparatus includes a first issuing means (20, S35, S37, S39) and a first receiving means (20, S1, S7, S19, S21, S23, S31, S49, S51, S53, S61). The first issuing means encrypts a content mode shifting command to shift to a content mode allowing access to content data stored in the attached storage medium (16, 18) by utilizing first key data, and issues the same to the storage medium. The first receiving means issues a reading command to the attached storage medium by executing a first predetermined program (IPL), and receives read data (encryption key original data, content data) output from the storage medium.

The first storage medium includes a first key data memory area (42c, 62), a first content data memory area (42b, 66), and a first controller (40). The first key data memory area stores the first key data. The first content data memory area stores first content data. The first controller, when the encrypted content mode shifting command from the attached information processing apparatus (12, 14) is received, shifts to the content mode by decrypting the encrypted content mode shifting command by utilizing the first key data and executing the same, and, when the reading command with respect to the content memory area is received from the attached information processing apparatus, does not respond to the reading command before shifting to the content mode and outputs the read data to the information processing apparatus after shifting to the content mode.

The second information processing apparatus includes a medium determining means (20, S113), a second issuing means (20, S35, S37, S39, S179, S181, S183), and a second receiving means (20, S19, S21, S23, S31, S49, S51, S53, S61, S101, S107, S121, S123, S125, S135, S145, S151, S163, S165, S167, S175, S193, S195, S197, S205). The medium determining means determines whether the attached storage medium is the first storage medium or the second storage medium. The second issuing means, when the medium determining means determines to be the first storage medium, encrypts a content mode shifting command to sift to the content mode by utilizing the first key data, and issues the same to the first storage medium, and when the medium determining means determines to be the second storage medium, encrypts the content mode shifting command to shift to the content mode by utilizing second key data different from the first key data, and issues the same to the second storage medium. The second receiving means issues a reading command to the attached storage medium by executing a second predetermined program different from the first predetermined program, and receives read data output from the storage medium.

The second storage medium includes a second key data memory area (42c, 70), a second content data memory area (42b, 74), and a second controller (40). The second key data memory area stores second key data. The second content data memory area stores second content data. The second controller, when the encrypted content mode shifting command is received from the attached second information processing apparatus, shifts to the content mode by decrypting the encrypted content mode shifting command by utilizing the second key data and executes the same, and when the reading command with respect to the content data memory area is received from the attached second information processing apparatus, does not respond to the reading command before shifting to the content mode, and outputs read data to the second information processing apparatus after shifting to the content mode.

According to the first invention, the encrypted command is transmitted, and there is the data in the information processing apparatus readable only when the mode shifts to the content mode, capable of ensuring high security. Furthermore, as to the second information processing apparatus being compatible with the first information processing apparatus, the first storage medium or the second storage medium can be attached, and if the first storage medium is attached, a command is encrypted by utilizing the first key data the same as that of the first information processing apparatus, capable of utilizing the same key data with compatibility kept. Accordingly, it is possible to keep costs related to the development, such as time and costs taken for the development as little as possible.

A second invention is according to the first invention, and the second storage medium is also attachable to the first information processing apparatus, and further comprises a first key data memory area for storing the first key data, the first issuing means of the first information processing apparatus issues a first encryption mode shifting command to shift to a first encryption mode for encrypting command and data with the storage medium, and transmitting and receiving the same, and then issues the content mode shifting command, the first controller of the first storage medium shifts to the first encryption mode by executing the first encryption mode shifting command, and shifts to the content mode by decrypting the received content mode shifting command by utilizing the first key data and executing the same in the first encryption mode, the second issuing means of the second information processing apparatus issues the first encryption mode shifting command to shift to the first encryption mode when the first storage medium is attached, and issues a second encryption mode shifting command to shift to a second encryption mode when the second storage medium is attached, the second controller of the second storage medium shifts to the first encryption mode by receiving and executing the first encryption mode shifting command, shifts to the content mode by decrypting the received content mode shifting command by utilizing the first key data and executing the same in the first encryption mode, or shifts to the second encryption mode by receiving and executing the second encryption mode shifting command, and shifts to the content mode by decrypting the received content mode shifting command by utilizing the second key data and executing the same in the second encryption mode.

In the second invention, the second storage medium is also attachable to the first information processing apparatus, and further comprises a first key data memory area (42c, 62) for storing the first key data. The first issuing means of the first information processing apparatus issues a first encryption mode shifting command to shift to a first encryption mode for encrypting command and data with the storage medium (S11, S13), and transmitting and receiving the same, and then issues the content mode shifting command (S35, S37, S39). The first controller of the first storage medium shifts to the first encryption mode by executing the first encryption mode shifting command (S17), and shifts to the content mode (S47) by decrypting the received content mode shifting command by utilizing the first key data and executing the same in the first encryption mode (S45). The second issuing means of the second information processing apparatus issues the first encryption mode shifting command to shift to the first encryption mode (S11, S13) when the first storage medium is attached, and issues a second encryption mode shifting command to shift to a second encryption mode (S155, S157) when the second storage medium is attached. The second controller of the second storage medium shifts to the first encryption mode (S17) by receiving and executing the first encryption mode shifting command (S15), shifts to the content mode (S47) by decrypting the received content mode shifting command by utilizing the first key data (S45) and executing the same in the first encryption mode, or shifts to the second encryption mode (S161) by receiving and executing the second encryption mode shifting command (S159), and shifts to the content mode (S191) by decrypting the received content mode shifting command by utilizing the second key data (S189) and executing the same in the second encryption mode.

According to the second invention, the second storage medium has a configuration the same as that of the first storage medium, and shifts to the content mode via the first encryption mode or the second encryption mode, and therefore, even if the second storage medium is attached to the first information processing apparatus, it can be used as it is.

A third invention is according to the second invention, and the first information processing apparatus issues a first content mode shifting command to shift to a first content mode, the second information processing apparatus issues the first content mode shifting command to shift to the first content mode when the first storage medium is attached, or issues a second content mode shifting command to shift to a second content mode when the second storage medium is attached, and the second controller of the second storage medium, when the first content mode shifting command is received, shifts to the first content mode by decrypting the first content mode shifting command by utilizing the first key data and executing the same, or when the second content mode shifting command is received, shifts to the second content mode by decrypting the second content mode shifting command by utilizing the second key data and executing the same.

In the third invention, the first information processing apparatus issues a first content mode shifting command to shift to a first content mode (S35, S37, S39). The second information processing apparatus issues the first content mode shifting command to shift to the first content mode (S35, S37, S39) when the first storage medium is attached, or issues a second content mode shifting command to shift to a second content mode (S179, S181, S183) when the second storage medium is attached. The second controller of the second storage medium, when the first content mode shifting command is received (S43), shifts to the first content mode (S47) by decrypting the first content mode shifting command by utilizing the first key data (S45) and executing the same, or when the second content mode shifting command is received (S187), shifts to the second content mode (S191) by decrypting the second content mode shifting command by utilizing the second key data (S189) and executing the same.

According to the third invention, the second storage medium selectively shifts to the first content mode or the second content mode depending on the command applied from the information processing apparatus, so that the second storage medium can be attached to the first information processing apparatus.

A fourth invention is according to the second or the third invention, and the first key data memory area of the first storage medium and the first key data memory area of the second storage medium are set to an identical start address.

In the fourth invention, the first key data memory area of the first storage medium and the first key data memory area of the second storage medium are set to an identical start address. That is, the same format is adopted. Here, the address means both of a logic address (virtual address) and a physical address.

According to the fourth invention, the first storage medium and the second storage medium adopt the same format, so that even if the first storage medium is attached to the second information processing apparatus, the first key data can be used as it is, and even if the second storage medium is attached to the first information processing apparatus, the first key data can be used as it is.

A fifth invention is according to any one of the second to fourth inventions, and second content data is constructed of third content data and fourth content data, the second content data memory area of the second storage medium includes a third content data memory area to store the third content data and a fourth content data memory area to store the fourth content data, and the second controller, when the first content mode shifting command is received, shifts to the first content mode by decrypting the first content mode shifting command by utilizing the first key data and executing the same, and makes the third content data memory area readable, or, when the second content mode shifting command is received, shifts to the second content mode by decrypting the second content mode shifting command by utilizing the second key data, and makes both of the third content data memory area and the fourth content data memory area readable.

In the fifth invention, the second content data is constructed of third content data and fourth content data. For example, the second content data memory area of the second storage medium includes a third content data memory area (66) to store the third content data and a fourth content data memory area (74) to store the fourth content data. The second controller, when the first content mode shifting command is received, shifts to the first content mode by decrypting the first content mode shifting command by utilizing the first key data and executing the same, and makes the third content data memory area readable. Or, the second controller, when the second content mode shifting command is received shifts to the second content mode by decrypting the second content mode shifting command by utilizing the second key data, and makes both of the third content data memory area and the fourth content data memory area readable. That is, if the second storage medium is attached to the first information processing apparatus, only the third content data memory area is made readable, and if the second storage medium is attached to the second information processing apparatus, the fourth content data memory area is made readable.

According to the fifth invention, depending on the information processing apparatus to which the second storage medium is attached, a readable memory area is differentiated, so that the content data only utilized in the first information processing apparatus and the content data only utilized in the second information processing apparatus can be separately stored.

A sixth invention is according to the fifth invention, and the second controller of the second storage medium makes the third content data memory area and the fourth content data memory area readable in the second content mode.

In the sixth invention, the second controller of the second storage medium makes the third content data memory area and the fourth content data memory area readable in the second content mode. Accordingly, the third content data memory area stores the content data as to the basic part to be utilized in the first information processing apparatus as well, and the fourth content data memory area stores the content data as to the additional part to be only utilized in the second information processing apparatus, for example.

According to the sixth invention, with respect to the second storage medium, the first information processing apparatus can read only the basic part, and the second information processing apparatus can read the additional part as well, for example. Accordingly, the second storage medium is configured by merely providing the fourth content data memory area to the first storage medium, capable of reducing times and costs related to the development.

A seventh invention is according to the fifth or the sixth invention, and the third content data memory area of the second storage medium stores a first program being executable by the first information processing apparatus, and the fourth content data memory area of the second storage medium stores a second program being unexecutable by the first information processing apparatus and being executable by the second information processing apparatus.

In the seventh invention, the third content data memory area of the second storage medium stores a first program being executable by the first information processing apparatus. Furthermore, the fourth content data memory area of the second storage medium stores a second program being unexecutable by the first information processing apparatus and being executable by the second information processing apparatus.

According to the seventh invention, the first information processing apparatus can execute the first program, so that the first information processing apparatus can execute the first program with the second storage medium attached as it is. Furthermore, the second storage medium is configured by merely additionally storing the second program to be executed by the second information processing apparatus in the first storage medium, capable of reducing times and costs related to the developing as little as possible.

An eighth invention is according to any one of the fifth to seventh inventions, and the first content data memory area of the first storage medium and the third content data memory area of the second storage medium are set to an identical start address.

In the eighth invention, the first content data memory area of the first storage medium and the third content data memory area of the second storage medium are set to an identical start address. That is, the same format is adopted. Here, the address means a logic address (virtual address) and a physical address.

According to the eighth invention, the first storage medium and the second storage medium adopts the identical format, and therefore, even if the first storage medium is attached to the second information processing apparatus, the first program can be read as it is, and even if the second storage medium is attached to the first information processing apparatus, the first program can be read as it is.

A ninth invention is according to the eighth invention, and the first content data memory area of the first storage medium is a memory area after a first address onward, the third content data memory area of the second storage medium is a memory area from the first address to a second address, and the fourth content data memory area of the second storage medium is a memory area after the second address onward, wherein the second address is variable.

In the ninth invention, and the first content data memory area of the first storage medium is a memory area after a first address onward. Furthermore, the third content data memory area of the second storage medium is a memory area from the first address to a second address (boundary address), and the fourth content data memory area of the second storage medium is a memory area after the second address onward. The second address is variable.

In the ninth invention, a border is provided by the second address, and therefore, in a case that the second storage medium is attached to the first information processing apparatus, the first program can be executed by reading from the first address to the border, and in a case that the second storage medium is attached to the second information processing apparatus, the second program can be executed by reading the address after the border onward. Thus, even if the second storage medium is attached to the first information processing apparatus, it can be used as it is.

A tenth invention is according the ninth invention, and information of the second address is stored in a predetermined area of the second storage medium.

In the tenth invention, information of the second address is stored in a predetermined area (60) of the second storage medium.

According to the tenth invention, the second address is stored in the predetermined area of the second storage medium, so that freely setting the second address makes the second address variable.

An eleventh invention is according to any one of the fifth to tenth inventions, and the second controller of the second information processing apparatus accepts a first reading command in the first content mode, or accepts a second reading command in the second content mode.

In the eleventh invention, the second controller of the second information processing apparatus accepts a first reading command in the first content mode. Furthermore, the second controller accepts a second reading command in the second content mode.

According to the eleventh invention, depending on the mode, the command to be accepted is differentiated, and a command other than a correct command is not to be accepted in each mode, resulting in high security.

A twelfth invention is according to the eleventh invention, and the reading command in the first content mode of the first controller of the first storage medium and the reading command in the first content mode of the second controller of the second storage medium are identical.

In the twelfth invention, the reading command in the first content mode of the first controller of the first storage medium and the reading command in the first content mode of the second controller of the second storage medium are identical. That is, even in the different storage mediums, the same command can be used in the same mode.

In the twelfth invention, even in the different storage mediums, the same command can be used in the same mode, so that it is possible to save time for a design variation at that part. Thus, it is possible to keep costs related to the development as little as possible.

A thirteenth invention is according to the first invention, the first controller of the first storage medium and the second controller of the second storage medium are started in a non-encryption mode not requiring decryption of the received command, then shifts to an encryption mode in response to a command from the attached information processing apparatus, and receives the encrypted content mode shifting command from the information processing apparatus in the encryption mode.

In the thirteenth invention, the first controller of the first storage medium and the second controller of the second storage medium are started in a non-encryption mode not requiring decryption of the received command, then shifts to an encryption mode in response to a command from the information processing apparatus attached with the first storage medium and the second storage medium, and receives the encrypted content mode shifting command from the information processing apparatus in the encryption mode.

According to the thirteenth invention, the encrypted command is transmitted and received, capable of ensuring high security. Furthermore, the mode is classified into the non-encryption mode and the encryption mode, so that it is possible to reduce processing in comparison with a case of only the encryption mode, capable of ensuring both of the security and the processing speed.

A fourteenth invention is according to the thirteenth invention, and the first controller of the first storage medium has a first encryption mode, and is capable of executing a first content mode shifting command in the first encryption mode, and the second controller of the second storage medium has the first encryption mode and a second encryption mode, and is capable of executing the first content mode shifting command in the first encryption mode, and is capable of executing a second content mode shifting command in the second encryption mode.

In the fourteenth invention, the first controller of the first storage medium has a first encryption mode, and is capable of executing a first content mode shifting command in the first encryption mode. On the other hand, the second controller of the second storage medium has the first encryption mode and a second encryption mode, and is capable of executing the first content mode shifting command in the first encryption mode, and is capable of executing a second content mode shifting command in the second encryption mode. That is, if the first storage medium is attached to either of the first information processing apparatus or the second information processing apparatus, it is possible to shift to the first content mode. Furthermore, if the second storage medium is attached to the first information processing apparatus, it is possible to shift to the first content mode, and if the second storage medium is attached to the second information processing apparatus, it is possible to shift to the second content mode.

According to the fourteenth invention, it is possible to attach each of the first storage medium and the second storage medium to both of the first information processing apparatus and the second information processing apparatus as it is.

A fifteenth invention is according to the fourteenth invention, and the first storage medium has a first secure area being accessible only in the first encryption mode, the second storage medium has the first secure area being accessible only in the first encryption mode and a second secure area being accessible only in the second encryption mode, and the second information processing apparatus issues the first encryption mode shifting command by the second issuing means irrespective of the attached storage medium being the first storage medium or the second storage medium, reads the data of the first secure area, and, in a case that the attached storage medium is the second storage medium, then issues the second encryption mode shifting command by the second issuing means to read the data of the second secure area, and further issues the second content mode shifting command.

In the fifteenth invention, the first storage medium has a first secure area (64) being accessible only in the first encryption mode, while the second storage medium has the first secure area (64) being accessible only in the first encryption mode and a second secure area (72) being accessible only in the second encryption mode. The second information processing apparatus issues the first encryption mode shifting command by the second issuing means irrespective of the attached storage medium being the first storage medium or the second storage medium, reads the data of the first secure area, and, in a case that the attached storage medium is the second storage medium, then issues the second encryption mode shifting command by the second issuing means to read the data of the second secure area, and further issues the second content mode shifting command.

According to the fifteenth invention, only when the second storage medium is attached to the second information processing apparatus, it is possible to shift to the second content mode, so that the data stored in the second content data memory area cannot be read by the first information processing apparatus and other information processing apparatuses, for example. That is, it is possible to inhibit an unlawful reading from occurring.

A sixteenth invention is according to the fifteenth invention, and the second issuing means, in a case that attached storage medium is the second storage medium, reads the data of the first secure area, and then controls turning on or off the power of the second storage medium or resets the second controller.

In the sixteenth invention, the second issuing means, in a case that attached storage medium is the second storage medium, reads the data of the first secure area, and then controls turning on or off the power of the second storage medium or resets the second controller. That is, the second issuing means returns the mode to the initial state once.

In the sixteenth invention, after reading the data in the first secure area, prior to reading the data of the second secure area, the mode is returned to the initial state once by turning on and off the power of the second storage medium, resetting the second storage medium, and so forth, so that the mode does not shift to the reverse direction. That is, it is possible to prevent unlawful reading of data by an unlawful access from occurring. This makes it possible to produce processing of accessing to the second storage medium without adding any change to the processing of accessing the first storage medium. Accordingly, it is possible to keep times and costs related to the development as little as possible.

A seventeenth invention is according to the first invention, and the second storage medium further includes an identification information memory area to store identification information of itself, and the second information processing apparatus determines whether or not the attached storage medium is the second storage medium depending on the presence or absence of the identification information.

In the seventeenth invention, the second storage medium further includes an identification information memory area (60) to store identification information of itself. The second information processing apparatus determines whether or not the attached storage medium is the second storage medium depending on the presence or absence of the identification information.

According to the seventeenth invention, the kind of the storage medium is determined depending on the presence or absence of the identification information, making the determination processing simple, and capable of appropriately shifting to the mode and issuing the command depending on the kind of the storage medium.

An eighteenth invention is according to the seventeenth invention, and the second information processing apparatus issues a reading command of the identification information stored in the identification information memory area to the attached storage medium on start-up, and the second controller of the second storage medium is accessible to the identification information memory area, but inaccessible to the first secure area and the second secure area on start-up.

In the eighteenth invention, the second information processing apparatus issues a reading command of the identification information stored in the identification information memory area to the attached storage medium on start-up. The second controller of the second storage medium is accessible to the identification information memory area, but inaccessible to the first secure area and the second secure area on start-up. For example, the second controller cannot access an area other than the identification information memory area on start-up.

According to the eighteenth invention, on start-up, only the area necessary when start-up, such the identification information memory area is made accessible, capable of ensuring high security.

A nineteenth invention is according to the first invention, the first key data memory area and the second key data memory area are inaccessible from outside.

According to the nineteenth invention, the first key data memory area and the second key data memory area are inaccessible from outside. That is, even if an instruction (command) of reading the first key data memory area and the second key data memory area is applied from the host computer to the controller of the storage medium, the instruction is not executed.

According to the nineteenth invention, with respect to even the predetermined apparatus such as the first information processing apparatus and the second information processing apparatus, the key data is not read according to an instruction from outside, capable of ensuring high security.

A twentieth invention is according to the first invention, and the information processing apparatus generates key data from encryption key original data read from the storage medium and encryption generation data stored inside the information processing apparatus.

In the twentieth invention, the information processing apparatus generates key data from encryption key original data read from the storage medium and encryption generation data stored inside the information processing apparatus. Accordingly, the information processing apparatus generates key data when needed, and deletes it when unneeded, for example.

In the twentieth invention, the key data is generated, and the risk of the key data being unlawfully read from the information processing apparatus is kept as low as possible, capable of ensuring high security.

A twenty-first invention is an information processing apparatus being configured to be detachable with a first storage medium having a first content data memory area storing first content data and being characterized by comprising a medium determining means for determining whether the first storage medium is attached or a second storage medium having a second content data memory area storing second content data is attached; a first issuing means for, when the medium determining means determines that the first storage medium is attached, encrypting a first content mode shifting command to shift to a first content mode allowing for access to the first content data stored in the first content data memory area by utilizing first key data, and issuing the same to the first storage medium; a first receiving means for receiving first read data output from the first storage medium in response to the first content mode shifting command being issued by the first issuing means; a second issuing means for, when the medium determining means determines that the second storage medium is attached, encrypting a second content mode shifting command to shift to a second content mode allowing for access to the second content data stored in the second content data memory area by utilizing second key data different from the first key data, and issuing the same to the second storage medium; and a second receiving means for receiving second read data output from the second storage medium in response to the second content mode shifting command issued by the second issuing means.

In the twenty-first invention as well, similar to the first invention, the encrypted command is transmitted, and there is the data readable only when the mode shifts to the content mode, capable of ensuring high security.

A twenty-second invention is information processing method of an information processing apparatus being configured to be detachable with a first storage medium having a first content data memory area storing first content data and being characterized by including following steps of: (a) determining whether the first storage medium is attached or a second storage medium having a second content data memory area storing second content data is attached; (b) encrypting a first content mode shifting command to shift to a first content mode allowing for access to the first content data stored in the first content data memory area by utilizing first key data, and issuing the same to the first storage medium when the step (a) determines that the first storage medium is attached; (c) receiving first read data output from the first storage medium in response to the first content mode shifting command being issued by the step (b); or (d) encrypting a second content mode shifting command to shift to a second content mode allowing for access to the second content data stored in the second content data memory area by utilizing second key data different from the first key data, and issuing the same to the second storage medium when the step (a) determines that the second storage medium is attached; and (e) receiving second read data output from the second storage medium in response to the second content mode shifting command issued by the step (d).

In the twenty-second invention as well, similar to the first invention, the encrypted command is transmitted, and there is the data readable only when the mode shifts to the content mode, capable of ensuring high security.

A twenty-third invention is a storage medium storing an information processing program readable by a computer of an information processing apparatus being configured to be detachable with a first storage medium having a first content data memory area storing first content data, and is characterized by causing the computer of the information processing apparatus to function as: a medium determining means for determining whether the first storage medium is attached or a second storage medium having a second content data memory area storing second content data is attached; a first issuing means for, when the medium determining means determines that the first storage medium is attached, encrypting a first content mode shifting command to shift to a content mode allowing access to the first content data stored in the first content data memory area by utilizing first key data, and issuing the same to the first storage medium; a first receiving means for receiving first read data output from the first storage medium in response to the first content mode shifting command being issued by the first issuing means; a second issuing means for, when the medium determining means determines that the second storage medium is attached, encrypting a second content mode shifting command to shift to a second content mode allowing for access to the second content data stored in the second content data memory area by utilizing second key data different from the first key data, and issuing the same to the second storage medium; and a second receiving means for receiving second read data output from the second storage medium in response to the second content mode shifting command issued by the second issuing means.

In the twenty-third invention as well, similar to the first invention, the encrypted command is transmitted, and there is the data readable only when the mode shifts to the content mode, capable of ensuring high security.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is an illustrative view showing one embodiment of an information processing system of the present invention;
Figure 2 is a block diagram showing an electric configuration of a first information processing apparatus and a first semiconductor memory shown in Figure 1;
Figure 3 is a block diagram showing an electric configuration of a second information processing apparatus and a second semiconductor memory shown in Figure 1;
Figure 4 is an illustrative view showing a memory map of a ROM provided to the first semiconductor memory shown in Figure 1;
Figure 5 is an illustrative view showing a memory map of a ROM provided to the second semiconductor memory shown in Figure 1;
Figure 6 is an illustrative view explaining a mode shifting of the semiconductor memory and a command from the information processing apparatus in a case that the first semiconductor memory or the second semiconductor memory is attached to the first information processing apparatus shown in Figure 1;
Figure 7 is an illustrative view explaining a mode shifting of the second semiconductor memory and a command from the second information processing apparatus in a case that the second semiconductor memory is attached to the second information processing apparatus shown in Figure 1;
Figure 8 is a table showing accessibility from the host computer (12, 14) to each memory area of the semiconductor memory in each mode;
Figure 9 is an illustrative view showing a memory map of the ROM of the first semiconductor memory in a normal mode and a secure mode;
Figure 10 is an illustrative view showing a memory map of the ROM of the first semiconductor memory in an application mode;
Figure 11 is an illustrative view showing a memory map of the ROM of the second semiconductor memory in a normal mode;
Figure 12 is an illustrative view showing a memory map of the ROM of the second semiconductor memory in a secure mode;
Figure 13 is an illustrative view showing a memory map of the ROM of the second semiconductor memory in the application mode;
Figure 14 is an illustrative view showing a memory map of the ROM of the second semiconductor memory in a secure 2 mode;
Figure 15 is an illustrative view showing a memory map of the ROM of the second semiconductor memory in an application 2 mode;
Figure 16 is a flowchart showing a first part of boot processing by the first information processing apparatus and the semiconductor memory;
Figure 17 is a flowchart sequel to Figure 16 showing a second part of the boot processing by the first information processing apparatus and the semiconductor memory;
Figure 18 is a flowchart sequel to Figure 17 showing a third part of the boot processing by the first information processing apparatus and the semiconductor memory;
Figure 19 is a flowchart sequel to Figure 18 showing a fourth part of the boot processing by the first information processing apparatus and the semiconductor memory;
Figure 20 is a flowchart sequel to Figure 19 showing a fifth part of the boot processing by the first information processing apparatus and the semiconductor memory;
Figure 21 is a flowchart showing a first part of boot processing by the second information processing apparatus and the semiconductor memory;
Figure 22 is a flowchart sequel to Figure 21 showing a second part of the boot processing by the second information processing apparatus and the semiconductor memory;
Figure 23 is a flowchart sequel to Figure 22 showing a third part of the boot processing by the second information processing apparatus and the semiconductor memory;
Figure 24 is a flowchart sequel to Figure 23 showing a fourth part of the boot processing by the second information processing apparatus and the semiconductor memory;
Figure 25 is a flowchart sequel to Figure 24 showing a fifth part of the boot processing by the second information processing apparatus and the semiconductor memory;
Figure 26 is a flowchart sequel to Figure 25 showing a sixth part of the boot processing by the second information processing apparatus and the semiconductor memory;
Figure 27 is a flowchart sequel to Figure 26 showing a seventh part of the boot processing by the second information processing apparatus and the semiconductor memory; and
Figure 28 is a flowchart sequel to Figure 27 showing an eighth part of the boot processing by the second information processing apparatus and the semiconductor memory.

### DETAILED DESCRIPTION OF THE PREFERRED EMBODIMENTS

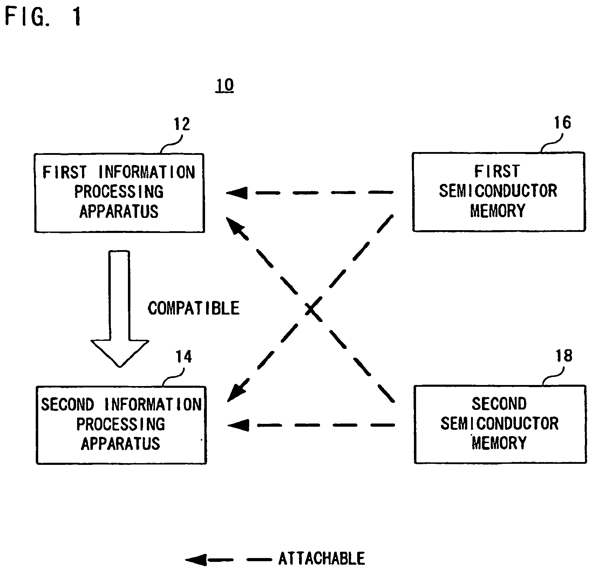

Referring to Figure 1, an information processing system10 of this embodiment includes a first information processing apparatus 12 and a second information processing apparatus 14. The first information processing apparatus 12 and the second information processing apparatus 14 are for utilizing a program (application program) and data stored in a semiconductor memory (16, 18) to be described later, and are applied to a general-purpose computer, a PDA (Personal Digital Assistant) and a cellular phone, for example.

Furthermore, the information processing system10 includes the first semiconductor memory 16 and the second semiconductor memory 18. Although illustration is omitted, the first semiconductor memory 16 and the second semiconductor memory 18 are configured to be attached to and detached from the first information processing apparatus 12 and the second information processing apparatus 14. The first semiconductor memory 16 and the second semiconductor memory 18 is a storage medium for storing a program and data (hereinafter correctively referred to as "content data") prohibiting an unlawful computer access, that is, being protected by copyright. Thus, the first semiconductor memory 16 and the second semiconductor memory 18 are made accessible to content data only by a predetermined apparatus, such as the first information processing apparatus 12 and the second information processing apparatus 14.

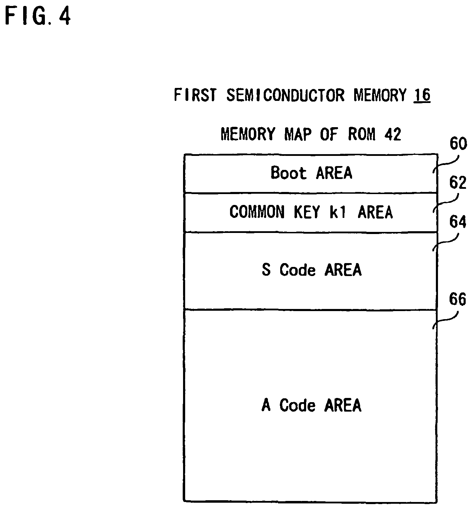

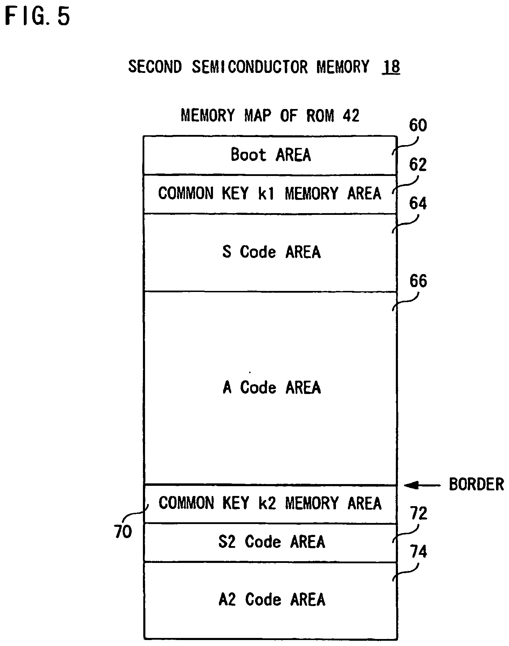

Additionally, in this embodiment, the second information processing apparatus 14 is configured by upgrading the first information processing apparatus 12, and is adapted to be able to directly read the first semiconductor memory 16 readable by the first information processing apparatus 12. That is, the second information processing apparatus 14 is compatible with the first information processing apparatus 12. Furthermore, as described later, the second semiconductor memory 18 includes a configuration being equal to the first semiconductor memory 16, and has an area storing content data necessary by only the second information processing apparatus 14 (see Figure 4 and Figure 5).

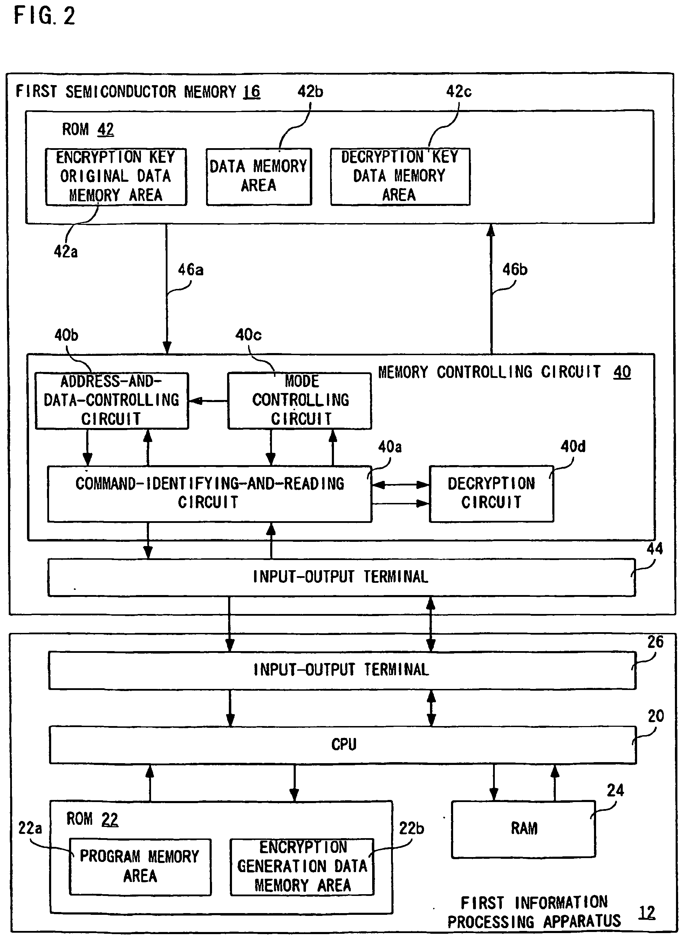

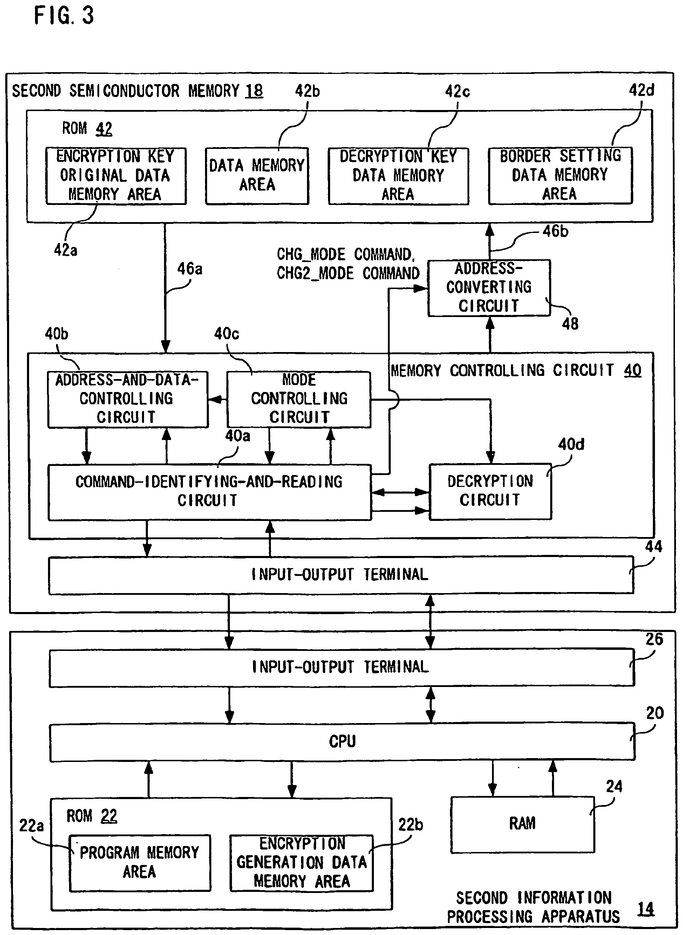

Figure 2 is a block diagram showing an electric configuration in a case that the first semiconductor memory 16 is attached to the first information processing apparatus 12. Figure 3 is a block diagram showing an electric configuration in a case that the second semiconductor memory 18 is attached to the second information processing apparatus 14. As understood from Figure 2 and Figure 3, the first information processing apparatus 12 and the second information processing apparatus 14 are constructed of the same circuit components, and the first semiconductor memory 16 and the second semiconductor memory 18 are constructed of approximately the same circuit components. Thus, Figure 2 is explained in detail, and Figure 3 is explained as to the point different from Figure 2 in detail.

It should be noted in Figure 2 and Figure 3, the same reference numerals are given to the circuit components having the same function.

As shown in Figure 2, the first information processing apparatus 12 includes a CPU 20, and the CPU 20 is connected with a ROM 22, a RAM 24 and an input-output terminal 26. Each of the ROM 22, the RAM 24 and the input-output terminal 26 is connected to the CPU 20 by utilizing an address bus and a data bus. In addition, the data bus is utilized for transmitting a command. This holds true for the embodiment hereafter.

The CPU 20 exerts the entire control over the first information processing apparatus 12. Examples are to generate and transmit a command to be issued to the first semiconductor memory 16, to generate encryption key data (common key k1 data described later), and to develop the content data read from the first semiconductor memory 16 in the RAM 24 to execute a program.

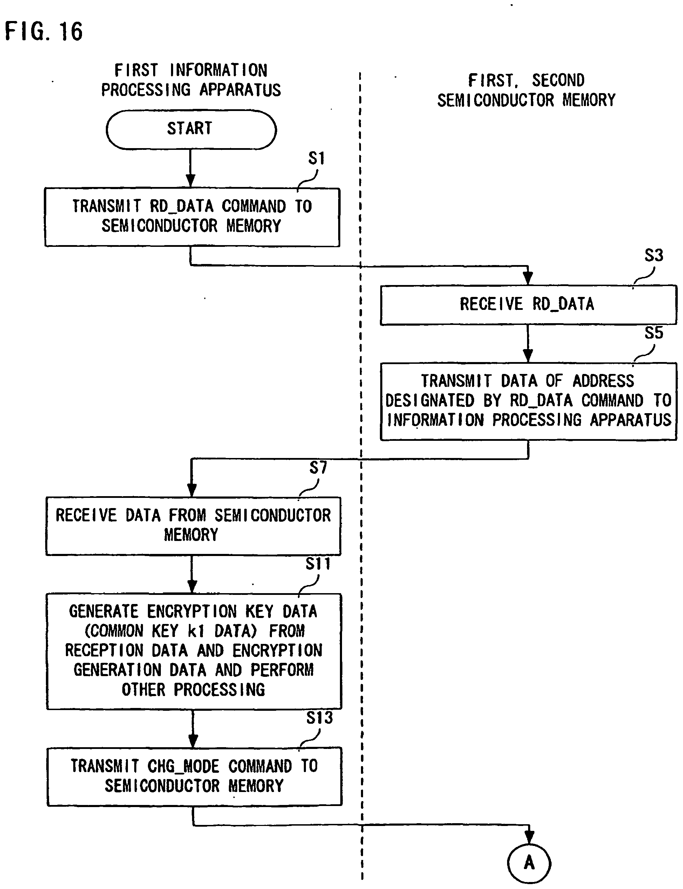

The ROM 22 include a program memory area 22a and an encryption generation data memory area 22b. The program memory area 22a stores an IPL (Initial Program Loader), and the IPL is activated when the power supply of the first information processing apparatus 12 is turned on. According to the IPL, the CPU 20 and a memorycontrolling circuit 40 of the first semiconductor memory 16 execute boot processing (see Figure 16-Figure 20). Furthermore, the encryption generation data memory area 22b stores encryption generation data. The CPU 20 produces encryption key data (common key k1 data) from the encryption generation data and encryption key original data applied from the first semiconductor memory 16. Although detailed explanation is omitted, for example, the encryption generation data and the encryption key original data, being binary data, from which the encryption key data is generated through a predetermined arithmetic operation (addition and multiplication, etc.).

It should be noted that in this embodiment, the program memory area 22a and the encryption generation data memory area 22b are provided to the ROM 22, but these may be stored in the separate ROMs.

The RAM 24 is utilized as a working area and a buffer area of the CPU 20, and is also used for generating the above-described encryption key data, and (temporarily) storing data, such as the generated encryption key data and the content data read from the first semiconductor memory 16.

The input-output terminal 26 is a connection terminal or a connector to be electrically connected to an input-output terminal 44 of the semiconductor memory 16. Although illustration is omitted, the input-output terminal 26 and the input-output terminal 44 have pins (terminals) of the same number and the same arrangement (or the same array).

The first semiconductor memory 16 includes the memory controlling circuit 40, and the memory controlling circuit 40 is connected with a ROM 42 and the input-output terminal 44. The ROM 42 is connected to the memory controlling circuit 40 by utilizing a data bus 46a and an address bus 46b. Similarly, the input-output terminal 44 is connected to the memory controlling circuit 40 by utilizing the data bus and the address bus.

The memory controlling circuit 40 exerts the entire control over the first semiconductor memory 16. As understood with reference to Figure 2, the memory controlling circuit 40 includes a command-identifying-and-reading circuit 40a, an address-and-data-controlling circuit 40b, a mode controlling circuit 40c and a decrypting circuit 40d. Each of the address-and-data-controlling circuit 40b, the mode controlling circuit 40c and the decrypting circuit 40d is connected to the command-identifying-and-reading circuit 40a by utilizing the command bus and the data bus.

The command-identifying-and-reading circuit 40a has a function of determining a decrypted command, and executing an operation corresponding to the identified command. For example, in a case that a command which is supplied from the first information processing apparatus 12, and decrypted by the decrypting circuit 40d is a reading command (RD_DATA command) of the data memory area 42b provided to the ROM 42, the command-identifying-and-reading circuit 40a executes the reading command. More specifically, the command-identifying-and-reading circuit 40a extracts an reading instruction code and reading address data from the reading command, and instructs the address-and-data-controlling circuit 40b to make the ROM 42 output a reading signal and a reading address in the data memory area 42b to thereby read the data stored in the data memory area 42b, and receives the read data (read data).

Here, as described later, depending on the mode, the executable command is decided in advance. Thus, if the command-identifying-and-reading circuit 40a determines to be an unexecutable command, the command is ignored (the command is not responded). This makes it possible to prevent an unlawful access from the host computer (outside), such as other information processing apparatuses (except for the second information processing apparatus 14) except for the first information processing apparatus 12 from occurring. Furthermore, the command-identifying-and-reading circuit 40a can know a current mode according to an output from the mode controlling circuit 40c.

Moreover, if the first semiconductor memory 16 is a normal mode, a command from the first information processing apparatus 12 is not encrypted and is not required to be subjected to decryption processing, and therefore, the command-identifying-and-reading circuit 40a identifies the command as it is, and executes the identified command.

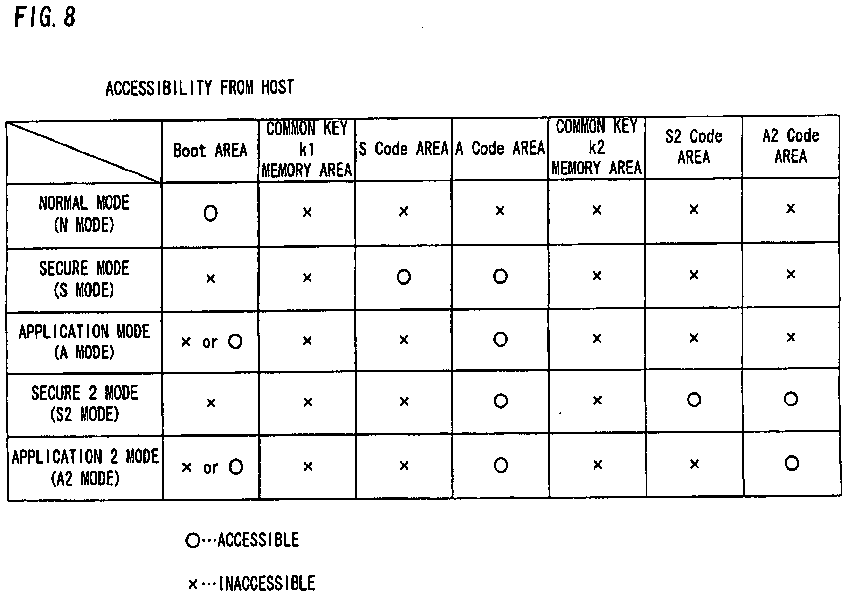

The address-and-data-controlling circuit 40b controls reading of the data from the ROM 42 according to the command from the command-identifying-and-reading circuit 40a. Here, as described later, the address to be read is decided depending on the mode (command) (see Figure 8-Figure 10). Accordingly, even if a command designating an unlawful address is input, the address to be read is fixedly decided, so that the data is never read unlawfully. The address-and-data-controlling circuit 40b can know a current mode according to an output from the mode controlling circuit 40c as well.

The mode controlling circuit 40c determines which mode the first semiconductor memory 16 is, a normal mode (N MODE), a secure mode (S MODE) or an application mode (A MODE), and outputs the data of the determination result to the command-identifying-and-reading circuit 40a and the address-and-data-controlling circuit 40b as necessary.

The decrypting circuit 40d decrypts the encrypted command (encryption command) applied from the first information processing apparatus 12 via the command-identifying-and-reading circuit 40a by utilizing decryption key data read from the decryption key data memory area 42c described later, and applies the decrypted command to the command-identifying-and-reading circuit 40a. In this embodiment, a common key system is adopted, and therefore, common key k1 data is used as decryption key data, here.

As described above, the ROM 42 of the first semiconductor memory 16 includes an encryption key original data memory area 42a, a data memory area 42b, and a decryption key data memory area 42c. The encryption key original data memory area 42a stores encryption key original data as original or source data for generating encryption key data (common key k1 data) on the side of the first information processing apparatus 12. In this embodiment, the encryption key original data is identical among the first semiconductor memories 16 storing the same content data. The data memory area 42b stores content data as described above. In addition, the decryption key data memory area 42c stores decryption key data (common key k1 data here) as described above.

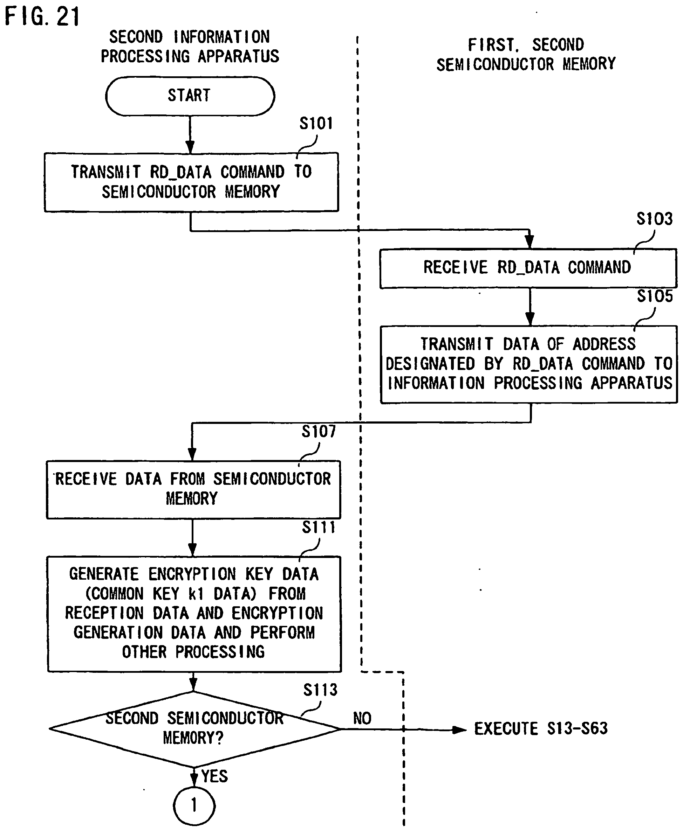

As described above, Figure 3 is a block diagram showing an electric configuration when the second semiconductor memory 18 is attached to the second information processing apparatus 14. As shown in Figure 3, the second information processing apparatus 14 is configured by circuit components having a function the same as the firstinformation processing apparatus 12. Here, boot processing (see Figure 21-Figure 28) between the second information processing apparatus 14 and the second semiconductor memory 18 is different from the above-described boot processing (Figure 16-Figure 20) between the first information processing apparatus 12 and the first semiconductor memory 16, and therefore, in the second information processing apparatus 14, an IPL different in content of the processing is stored in the program memory area 22a of the ROM 22.

Furthermore, in the boot processing between the second information processing apparatus 14 and the second semiconductor memory 18, the CPU 20 stores two kinds of encryption generation data in the encryption generation data memory area 22b for generating common key k1 data and common key k2 data in order to generate the encryption key data (common key k1 data) to be used in the above-described boot processing between the first information processing apparatus 12 and the first semiconductor memory 16 and encryption key data (common key k2 data) different therefrom. Hereafter, for the sake of convenience of description, the encryption generation data to generate the common key k1 data is referred to as first encryption generating data, and the encryption generation data to generate the common key k2 data is referred to as second encryption generating data.

In addition, with respect to the second semiconductor memory 18, in the middle of the address bus 46b, an address converting circuit 48 is provided. The address converting circuit 48 converts addresses within a reading range in order to make data from the address next to a boundary address (see Figure 5) described later onward unreadable in the second semiconductor memory 18, and temporarily converts the address of the data stored in the area in order to read data stored of the area in the second semiconductor memory 18 where a direct access is not allowed. In this embodiment, the address converting circuit 48 sets the end address of the addresses to be read to the boundary address in response to a CHG_MODE command from the command-identifying-and-reading circuit 40a so as to make data from the address next to the boundary address onward unreadable in a case that the secure mode is set in the second semiconductor memory 18. That is, the address of within the reading range is converted. Furthermore, in a case that the secure 2 mode is set, the address of the data stored in an S2 Code area 72 is converted in response to a CHG2_MODE command from the command-identifying-and-reading circuit 40a so as to be moved to a S Code area 64 (see Figure 5).

Here, in a case that the second semiconductor memory 18 is attached to the first information processing apparatus 12, and the application mode is set, the address converting circuit 48 sets the end address of the addresses to be read to the boundary address so as to make the data from the address next to the boundary address onward unreadable in response to an sCHG_MODE command from the command-identifying-and-reading circuit 40a.

That is, with respect to the second semiconductor memory 18, when a mode except for the secure mode, the application mode, and the secure 2 mode is set, the address converting circuit 48 never executes converting the address. That is, in the mode except for the secure mode, the application mode, and the secure 2 mode, the address converting circuit 48 is inactivated.

As shown in Figure 3, in a case that the second semiconductor memory 18 is attached to the second information processing apparatus 14, the CHG_MODE command and the CHG2_MODE command are input from the command-identifying-and-reading circuit 40a to the address converting circuit 48 to activate the address converting circuit 48 in the secure mode and secure 2 mode.

Although illustration is omitted, in a case that the second semiconductor memory 18 is attached to the first information processing apparatus 12, the CHG_MODE command and the sCHG_MODE command are input from the command-identifying-and-reading circuit 40a to the address converting circuit 48 to activate the address converting circuit 48 in the secure mode and application mode.

In addition, with respect to the second semiconductor memory 18, a boundary setting data memory area 42d is provided to the ROM 42. In the boundary setting data memory area 42d, data (boundary setting data) to decide a border between an A Code area 66 and a common key k2 memory area 70 of the second semiconductor memory 18 is stored (see Figure 5). That is, the boundary setting data is data as to the end address (boundary address) of the A Code area 66. In this embodiment, the setting of the boundary address can be changed by 4 bytes. Here, in this embodiment, the boundary setting data is decided at shipment of the second semiconductor memory 18 from the factory, and stored in the ROM 42. Furthermore, if the boundary setting data is stored in a rewritable memory (EEPROM, flash memory, etc.) except for the ROM 42, variable setting may be possible.

Although not understood from Figure 2 and Figure 3, the data stored in the data memory area 42b and the decryption key data memory area 42c which are provided to the ROM 42 of the second semiconductor memory 18 are different from the data stored in the data memory area 42b and decryption key data memory area 42c which are provided in the ROM 42 of the first semiconductor memory 16.

More specifically, the data memory area 42b of the second semiconductor memory 18 is provided with an S2 Code area 72 and an A2 Code area 74 (see Figure 4 and Figure 5) in addition to the data memory area 42b of the first semiconductor memory 16 (S Code area 64 and A Code area 66). That is, content data only used in the second information processing apparatus 14 is stored.

In addition, in the decryption key data memory area 42c of the second semiconductor memory 18, decryption key data (common key k1 data) the same as the decryption key data stored in the decryption key data memory area 42c of the first semiconductor memory 16 and decryption key data (common key k2 data) different from the common key k1 data are stored.

Furthermore, in the second semiconductor memory 18, the mode controlling circuit 40c identifies a secure 2 mode (S2 MODE) and an application 2 mode (A2 MODE) in addition to the above-described normal mode, secure mode and application mode. In addition, the determination result of the mode in the mode controlling circuit 40c of the second semiconductor memory 18 is also applied to the decrypting circuit 40d in addition to the command-identifying-and-reading circuit 40a and the address-and-data-controlling circuit 40b.

Although not understood from the drawing, the boundary setting data stored in the boundary setting data memory area 42d is also applied to the decrypting circuit 40d. In this embodiment, in a case that the second semiconductor memory 18 is the secure 2 mode, the memory controlling circuit 40 (decrypting circuit 40d) starts reading from an address next to the address indicated by the boundary setting data (head address of the common key k2 memory area 70 described later). Thus, the common key k2 data as decryption key data is read. Here, in a case that the second semiconductor memory 18 is the secure mode, the memory controlling circuit 40 (decrypting circuit 40d) of the second semiconductor memory 18 starts reading from a head address of a common key k1 memory area 62 described later (see Figure 5). That is, the decrypting circuit 40d of the second semiconductor memory 18 selects the decryption key data to be used (common key k1 data, common key k2 data) depending on the mode applied from the mode controlling circuit 40c, and reads the selected decryption key data from the decryption key data memory area 42c of the ROM 42 to use the same in the decryption processing.

As described above, the first semiconductor memory 16 can also be attached to the second information processing apparatus 14, and the second semiconductor memory 18 can also be attached to the first information processing apparatus 12. Although illustration and detailed explanation are omitted, in a case that the first semiconductor memory 16 is attached to the second information processing apparatus 14, the second information processing apparatus 14 executes boot processing similar to that of the first information processing apparatus 12, and works similar to the first information processing apparatus 12. That is, by upgrading the first information processing apparatus 12, the function added by the second information processing apparatus 14 is not utilized. On the other hand, in a case that the second semiconductor memory 18 is attached to the first information processing apparatus 12, the first information processing apparatus 12 only uses the parts in the second semiconductor memory 18 having a configuration the same as that of the first semiconductor memory 16. Thus, reading the content data only used in the second information processing apparatus 14 is not executed.

Figure 4 shows a memory map of the ROM 42 in the first semiconductor memory 16, and Figure 5 shows a memory map of the ROM 42 in the second semiconductor memory 18. As understood from Figure 4 and Figure 5, the ROM 42 of the second semiconductor memory 18 includes a configuration the same as that of the ROM 42 of the first semiconductor memory 16, and therefore, an explanation as to the common parts is omitted.

As shown in Figure 4, the ROM 42 of the first semiconductor memory 16 includes a Boot area 60, the common key k1 memory area 62, the S Code area 64 and the A Code area 66. The Boot area 60 stores encryption key original data and data (address data) of the head addresses of the common key k1 memory area 62, the S Code area 64 and the A Code area 66. That is, the encryption key original data memory area 42a shown in Figure 2 is provided in the Boot area 60.

The common key k1 memory area 62 is an area to store common key k1 data, and corresponds to the above-described decryption key data memory area 42c. The common key k1 memory area 62 is an area to which a host computer, such as the first information processing apparatus 12 and the second information processing apparatus 14 cannot access. The S Code area 64 is a secure area to store data (content data) to be read in the secure mode. The A Code area 66 stores data (content data) to be read in the application mode. In the first semiconductor memory 16, the area combined with the S Code area 64 and the A Code area 66 corresponds to the above-described data memory area 42b.

As shown in Figure 5, the memory map of the ROM 42 of the second semiconductor memory 18 is further provided with the common key k2 memory area 70, the S2 Code area 72 and the A2 Code area 74 in addition to the memory map of the ROM 42 of the first semiconductor memory 16.

In the memory map of the ROM 42 of the second semiconductor memory 18, the Boot area 60 stores the boundary setting data in addition to the above-described data. That is, the boundary setting data memory area 42d shown in Figure 3 is provided in the Boot area 60.

The common key k2 memory area 70 is an area to store the common key k2 data, and inaccessible from the host computer (12, 14), such as the second information processing apparatus 14. Accordingly, in the second semiconductor memory 18, the area combined with the common key k1 memory area 62 and the common key k2 memory area 70 corresponds to the above-described decryption key data memory area 42c.

The S2 Code area 72 is a secure area similar to the S Code area 64, and stores the data (content data) to be read in the secure 2 mode. Here, in this embodiment, the S2 Code area 72 is made directly inaccessible in any modes in order to increase security. The A2 Code area 74 stores data (content data) to be read in the application 2 mode. Accordingly, in the second semiconductor memory 18, an area combined with the S Code area 64, the A Code area 66, the S2 Code area 72, and the A2 Code area 74 corresponds to the above-described data memory area 42b.

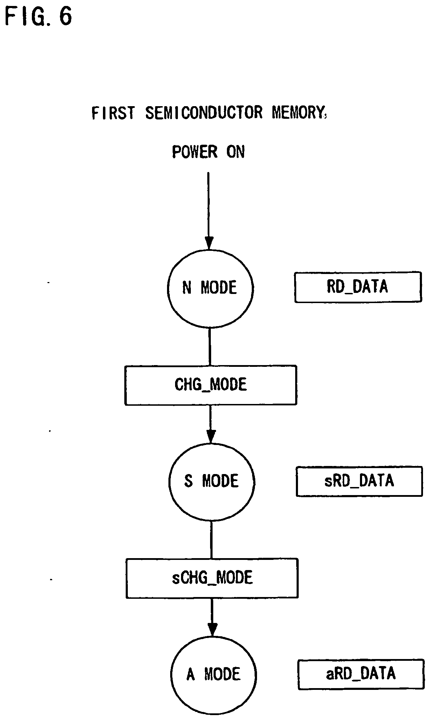

In this embodiment, as shown in Figure 6, when the power of the first semiconductor memory 16 is turned on, the normal mode is set, and in response to a mode change command (CHG_MODE command, sCHG_MODE command), the normal mode (N MODE) shifts to the application mode (A MODE) via the secure mode (S MODE). However, the mode shifts to the reverse direction. This holds true for the second semiconductor memory 18 described later. Accordingly, after the power of the first semiconductor memory 16 is turned off once, when the power is turned on again, the initial mode, that is, the normal mode is set again. Here, in stead of the power of the first semiconductor memory 16 being turned off and on, the first semiconductor memory 16 may be reset.

Furthermore, as shown in Figure 6, in the normal mode, the information processing apparatus (the first information processing apparatus 12 or the second information processing apparatus 14 in this embodiment) attached with the first semiconductor memory 16 issues an RD_DATA command or a CHG_MODE command to the first semiconductor memory 16. The RD_DATA command is a command (reading command) to read the data of the designated address from the ROM 42 of the first semiconductor memory 16. Here, the encryption key original data to generate encryption key data (common key k1 data) is read. Furthermore, the CHG_MODE command is a command to shift the first semiconductor memory 16 to the secure mode. Accordingly, the first semiconductor memory 16 receives the CHG_MODE command in the normal mode, and shifts to the secure mode by executing the command.

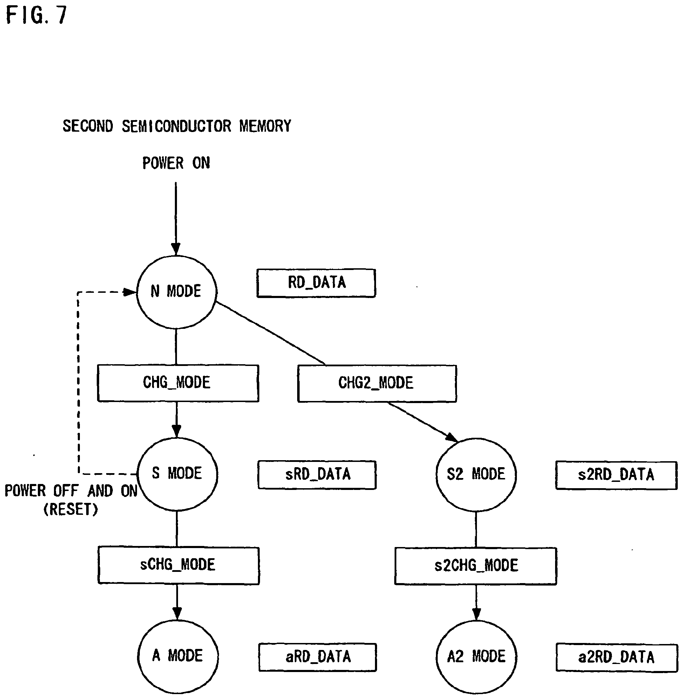

Although the explanation is made on the mode shifting when the first semiconductor memory 16 is attached to first information processing apparatus 12 or the second information processing apparatus 14, the mode shifts in the above-described manner when the second semiconductor memory 18 is attached to the first information processing apparatus 12 (see Figure 7).

In the secure mode, the information processing apparatus (12, 14) attached with the first semiconductor memory 16 issues an sRD_DATA command or an sCHG_MODE command to the first semiconductor memory 16. It should be noted that the commands issued in the secure mode are encrypted by the above-described encryption key data (common key k1 data, here). This is because that assuming that a, unlawful computer access occurs to the first semiconductor memory 16, and the command is read, the command is made indecipherable. In this embodiment, a common key system is adopted, and by executing encryption algorithm (hereinafter referred to as "encryption algorithm 1") in the common key system, a command is encrypted.

Since the encryption algorithm is already well known, the detailed explanation is omitted here. Moreover, one out of the plurality of encryption algorithms is enough to be adopted.

Accordingly, in the first semiconductor memory 16, the encrypted command is decrypted by the decryption key data (common key k1 data, here) the same as the encryption key data, and represented by a plain text. Herer, the sRD_DATA command is a reading command to read the data of the designated address from the ROM 42 of the first semiconductor memory 16. Furthermore, the sCHG_MODE command is a command to shift the first semiconductor memory 16 to the application mode. Accordingly, the first semiconductor memory 16 receives the encrypted sCHG_MODE command in the secure mode, and then shifts to the application mode by executing the sCHG_MODE command decrypted according to the encryption algorithm 1.

In addition, in the secure mode, the data to be transmitted from the first semiconductor memory 16 is encrypted by encryption algorithm (hereinafter referred to as "encryption algorithm 2") different from the encryption algorithm 1. In this embodiment, the encryption algorithm 2 is scrambling processing. The reason why a separate use of the algorithms between the encryption algorithm 1 and the encryption algorithm 2 is that when only the encryption algorithm 1 is used, an enormous amount of processing needs a lot of time for the boot processing, resulting in the lack of practical uses. Accordingly, the encryption algorithm 1 is used at the part where high security is required (a part of the command in this embodiment). This holds true hereafter in this embodiment. Moreover, the data encrypted by the encryption algorithm 2 is decrypted by executing the processing reverse to the scrambling processing by the encryption algorithm 2.

In the application mode, the information processing apparatus (12,14) attached with the first semiconductor memory 16 issues an aRD_DATA command to the first semiconductor memory 16. Here, the aRD_DATA command is a reading command to read the data of the designated address from the ROM 42 of the first semiconductor memory 16. It should be noted that in the application mode, the command issued from the information processing apparatus (12, 14) is encrypted by the encryption algorithm 2, and the data transmitted from the first semiconductor memory 16 is also encrypted by the encryption algorithm 2.

In this embodiment, in the secure mode and the application mode, the data transmitted from the first semiconductor memory 16 (this holds true for the second semiconductor memory 18 described later) is encrypted by the encryption algorithm 2, but the data may be transmitted as it is without executing the encryption. This is because that the command from the information processing apparatus (12, 14) is encrypted, and therefore, whether to encrypt or not as to the data from the first semiconductor memory 16 does not have a large impact on the level of the security. This holds true for the secure 2 mode and the application 2 mode described later.

Alternatively, as shown in Figure 7, when the power of the second semiconductor memory 18 is turned on, the normal mode is set. As described above, in a case that the second semiconductor memory 18 is attached to the first information processing apparatus 12, the normal mode shifts to the application mode via the secure mode. On the other hand, in a case that the second semiconductor memory 18 is attached to the second information processing apparatus 14, the normal mode shifts to the secure mode, and then, the power of the second semiconductor memory 18 is turned off and on to set the normal mode again. Thereafter, the second semiconductor memory 18 shifts from the normal mode to the application 2 mode (A2 MODE) via the secure 2 mode (S2 MODE).

It should be noted that as to the normal mode and the secure mode, the same as when the first semiconductor memory 16 is attached to the first information processing apparatus 12 or the second information processing apparatus 14 can be applied, and therefore, a redundant explanation is omitted. In the mode shifting explained with reference to Figure 6, the first semiconductor memory 16 is replaced with the second semiconductor memory 18, and the first information processing apparatus 12 or the second information processing apparatus 14 is replaced with only the second information processing apparatus 14.

In a case that the normal mode is set again, in the normal mode, as described above, the second information processing apparatus 14 issues the RD_DATA command to the second semiconductor memory 18 to thereby read the encryption key original data. This is because of generating the common key k2 data to be utilized in the secure 2 mode. Next, in the normal mode, the second information processing apparatus 14 issues a CHG2_MODE command to the second semiconductor memory 18. Here, the CHG2_MODE command is a command to shift the second semiconductor memory 18 from the normal to the mode secure 2 mode. Accordingly, the second semiconductor memory 18 receives the CHG2_MODE command in the normal mode, and then shifts to the secure 2 mode by executing the command.

In the secure 2 mode, the second information processing apparatus 14 attached with the second semiconductor memory 18 issues an s2RD_DATA command or an s2CHG_MODE command to the second semiconductor memory 18. Here, these commands are encrypted by utilizing the common key k2 data according to the encryption algorithm 1. The s2RD_DATA command, here, is a reading data to read the data of the designated address from the ROM 42 of the second semiconductor memory 18. The fact that data from the second semiconductor memory 18 is encrypted according to the encryption algorithm 2 is as described above. Furthermore, the s2CHG_MODE command is a command to shift the second semiconductor memory 18 to the application 2 mode. Accordingly, in the secure 2 mode, the second semiconductor memory 18 receives the encrypted s2CHG_MODE command, and shifts to the application 2 mode by executing the s2CHG_MODE command decrypted according to the encryption algorithm 1.

In the application 2 mode, the second information processing apparatus 14 attached with the second semiconductor memory 18 issues an a2RD_DATA command to the second semiconductor memory 18. The a2RD_DATA command, here, is a command to read the data of the designated address from the ROM 42 of the second semiconductor memory 18. It should be noted that as described above a command issued from the second information processing apparatus 14 is encrypted by the encryption algorithm 2, and data transmitted from the second semiconductor memory 18 is also encrypted by the encryption algorithm 2, in the application 2 mode.

The reason why the mode of the semiconductor memory (first semiconductor memory 16 and second semiconductor memory 18 in this embodiment) is shifted is to ensure high security. More specifically, an area of the ROM 42 accessible by the host computer (the first information processing apparatus 12 and the second information processing apparatus 14 in this embodiment) is different depending on the modes. A table showing whether or not to be accessible to each area of the ROM 42 shown in Figure 4 and Figure 5 is shown in Figure 8. In Figure 8, in each mode, a circle is placed in an area accessible from the host computer (12, 14), and a cross is placed in an area inaccessible from the host computer (12, 14). It should be noted that the secure 2 mode and the application 2 mode are restrictedly applied to a case that the second semiconductor memory 18 is attached to the second information processing apparatus 14.

In this embodiment, being accessible from the host computer (12, 14) means that the memory controlling circuit 40 can access the ROM 42 according to a request (command) from the host computer (12, 14). Furthermore, being inaccessible from the host computer (12, 14) means that the memory controlling circuit 40 does not accept a request from the host computer (12, 14), or the memory controlling circuit 40 does not access the ROM 42 even if there is a request.

As shown in Figure 8, in the normal mode, the host computer (the first information processing apparatus 12 or the second information processing apparatus 14) is accessible to only the Boot area 60 of the ROM 42. In the secure mode (S MODE), the host computer (12,14) is accessible to the S Code area 64 and the A Code area 66 of the ROM 42. In the application mode (A MODE), the host computer (12,14) is accessible to the A Code area 66 of the ROM 42. Noted, in the application mode, the host computer (12, 14) is made accessible to the Boot area 60 as well.

Furthermore, in the secure 2 mode (S2 MODE), the host computer (second information processing apparatus 14 in this embodiment) is accessible to the A Code area 66, the S2 Code area 72, and the A2 Code area 74 of the ROM 42. Then, in the application 2 mode (A2 MODE), the host computer (14) is accessible to the A Code area 66 and the A2 Code area 74 of the ROM 42. It should be noted that in the application 2 mode, the host computer (14) may be made accessible to the Boot area 60 as well.

As understood from Figure 8, in either mode, the host computer (12, 14) cannot access the common key k1 memory area 62 and the common key k2 memory area 70.

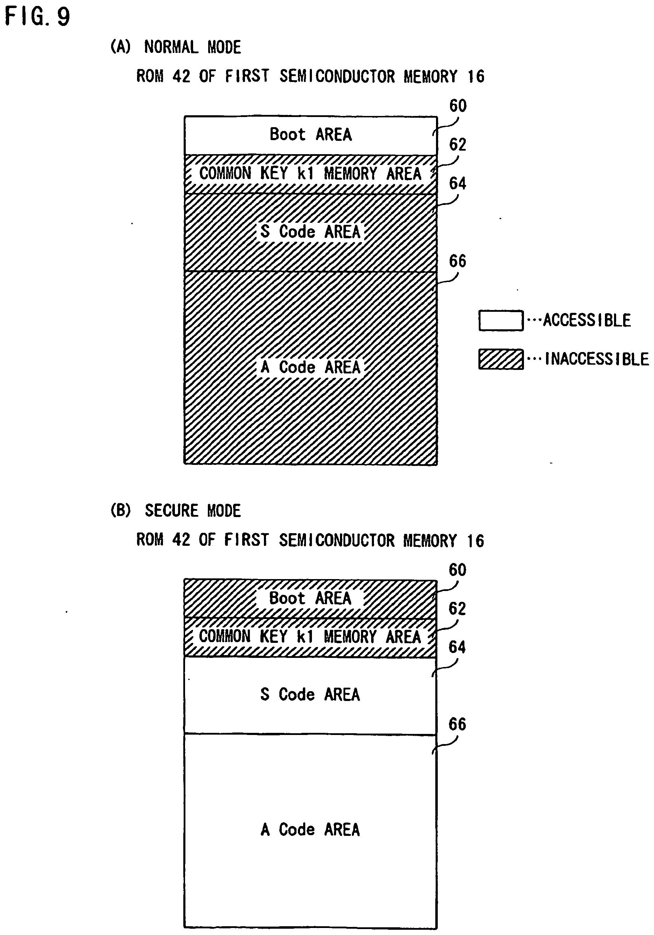

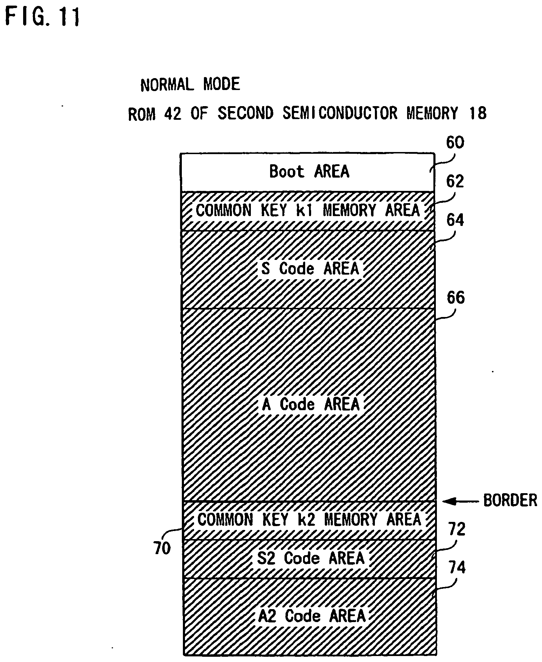

More specifically, with reference to the memory map of the ROM 42 shown in Figure 9-Figure 15, an explanation is made on the accessible area and the inaccessible area. Here, each of Figure 9-Figure 10 is a memory map of the ROM 42 of the first semiconductor memory 16. Each of Figure 11- Figure 15 is a memory map as to the ROM 42 of the second semiconductor memory 18.

As shown in Figure 9(A), in the normal mode, the host computer (12,14) is accessible only to the Boot area 60 of the ROM 42 of the first semiconductor memory 16. In the normal mode, the data reading command (RD_DATA command) designating the address of the Boot area 60 is applied from the host computer (12, 14) to the first semiconductor memory 16.

It should be noted that in Figure 9-Figure 15, the unshaded area means that the host computer (12, 14) is accessible, and the shaded area means that the host computer (12, 14) is not accessible.

As shown in Figure 9(B), in the secure mode, the host computer (12, 14) is accessible to the S Code area 64 and the A Code area 66 of the ROM 42 of the first semiconductor memory 16. In the secure mode, the data reading command (sRD_DATA command) designating the address after the head address of the S Code area 64 onward is applied to the first semiconductor memory 16 from the host computer (12, 14).

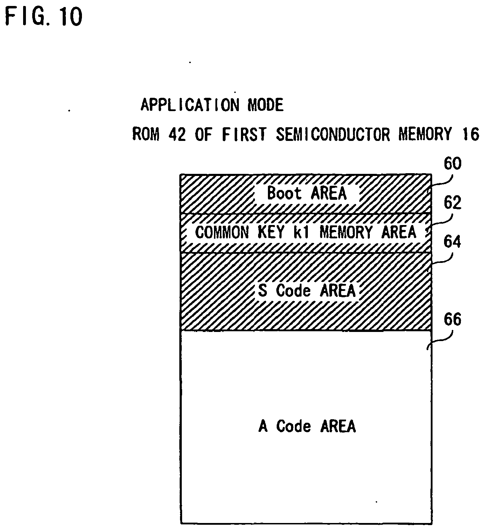

As shown in Figure 10, in the application mode, the host computer (12, 14) is accessible to the A Code area 66 of the ROM 42 of the first semiconductor memory 16. In the application mode, the data reading command (aRD_DATA command) designating an address after the head address of the A Code area 66 onward is applied to the first semiconductor memory 16 from the host computer (12,14).

Furthermore, as shown in Figure 11, in the normal mode, the host computer (12, 14) is accessible to the Boot area 60 of the ROM 42 of the second semiconductor memory 18. This is the same as the case shown in Figure 9(A), and therefore, a redundant explanation is omitted.

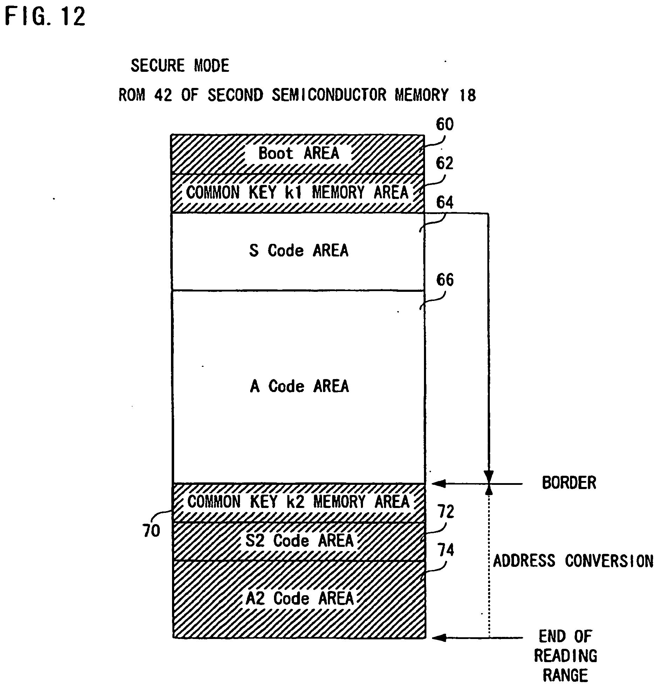

As shown in Figure 12, in the secure mode, the host computer (12, 14) is accessible to the S Code area 64 and the A Code area 66 of the ROM 42 of the second semiconductor memory 18. In the secure mode, similar to the case shown in Figure 9(B), the data reading command (sRD_DATA command) designating an address after the head address of the S Code area 64 onward is applied to the second semiconductor memory 18 from the host computer (12, 14).

However, in the secure mode (this holds true for the application mode described later) of the second semiconductor memory 18, the memory controlling circuit 40 is inhibited to access to an address next to the boundary address onward in response to an instruction (command) from the host computer (12, 14). This is because that in the secure mode, only the S Code area 64 and the A Code area 66 are made accessible similar to the case of the first semiconductor memory 16. This is due to a fact that the memory controlling circuit 40 to be used in the second semiconductor memory 18 is developed by adding a part of the circuit components to the memory controlling circuit 40 to be used in the first semiconductor memory 16. That is, through the use of a common security circuit (the command-identifying-and-reading circuit 40a and the decrypting circuit 40d), the time and costs involved in developing is slashed as little as possible to make the costs related to the development as little as possible.

Accordingly, in the secure mode, the data reading command designating an address after the head address of the S Code area 64 onward is applied to the second semiconductor memory 18, but the address converting circuit 48 defines the readable range so as to make only an address before the boundary address readable.

Furthermore, when the second semiconductor memory 18 is attached to the first information processing apparatus 12, the CPU 20 of the first information processing apparatus 12 is accessible to the second semiconductor memory 18, but the boundary address is set, and therefore, even if the secure mode or the application mode is set, an address next to the boundary address (common key k2 memory area 70, S2 Code area 72, A2 Code area 74) onward is made inaccessible.

In the secure 2 mode and the application 2 mode described later, the second semiconductor memory 18 is attached to the second information processing apparatus 14, and therefore, an address after the head address indicated by the command onward is made readable irrespective of the presence of the boundary address. However, as described above, the common key k2 memory area 70 is an area to which an access from outside is originally inhibited, and the S2 Code area 72 is an area to be read not from the physical address but from the logic address.

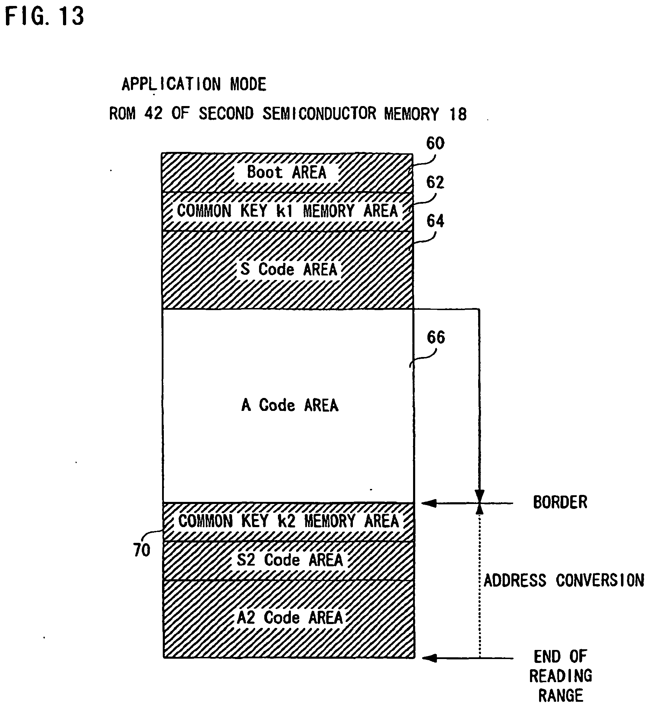

As shown in Figure 13, in the application mode, the host computer (only 12) is accessible to the A Code area 66 of the ROM 42 of the second semiconductor memory 18. In the application mode, the data reading command (aRD_DATA command) designating an address after the head address of the A Code area 66 onward is applied to the second semiconductor memory 18 from the host computer (only 12). However, as described above, the second semiconductor memory 18 shifts to the application mode only when the second semiconductor memory 18 is attached to the first information processing apparatus 12, and a readable range so as to make only an address before the boundary address readable is defined by the address converting circuit 48 similar to the secure mode.

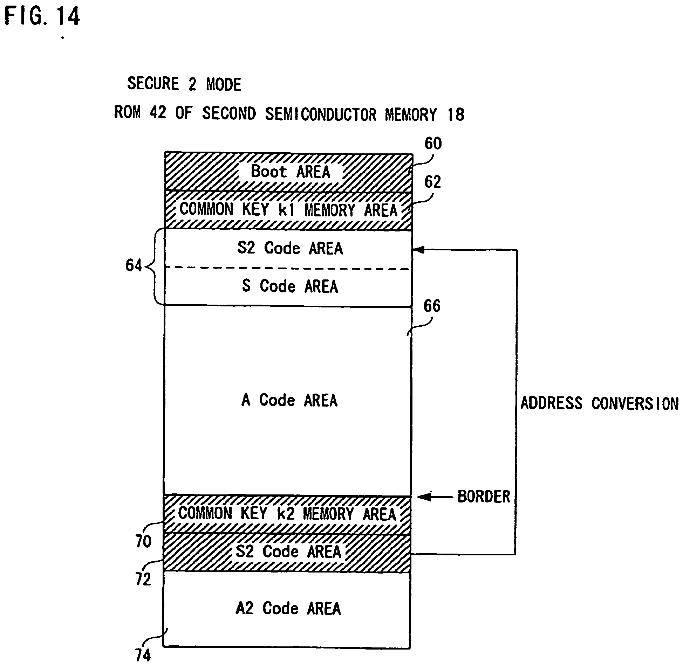

As shown in Figure 14, in the secure 2 mode, the host computer (only 14) is accessible to the A Code area 66, the S2 Code area 72, and the A2 Code area 74 of the ROM 42 of the second semiconductor memory 18. In the secure 2 mode, the data reading command (s2RD_DATA command) designating an address after the head address of the S Code area 64 onward is applied to the second semiconductor memory 18 from the host computer (14). However, as described above, it is impossible to directly access the S2 Code area 72 in any mode.

Due to this, in the secure 2 mode, the S2 Code area 72 is moved to the S Code area 64 by the address converting circuit 48. That is, by converting the address, the S2 Code area 72 is temporarily moved to the readable area (66) so as to be made accessible. Accordingly, the table shown in Figure 8 means that the S2 Code area 72 is made accessible by being moved to the S Code area 64.

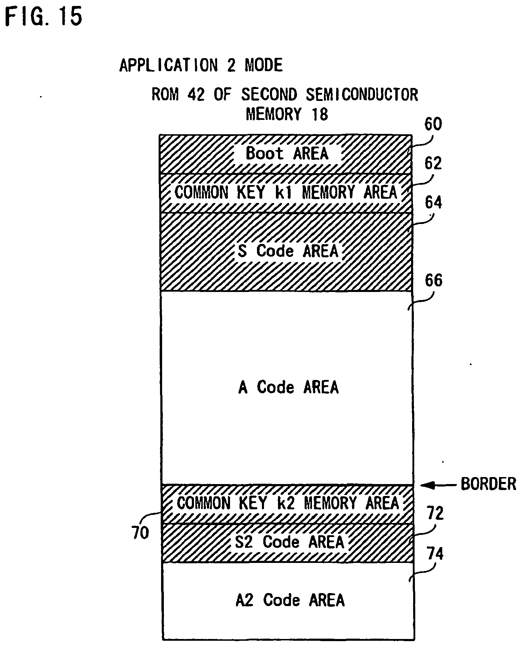

As shown in Figure 15, in the application 2 mode, the host computer (14) is accessible to the A Code area 66 and the A2 Code area 74 of the ROM 42 of the second semiconductor memory 18. In the application 2 mode, the data reading command designating an address after the head address of the A Code area 66 onward is applied from the host computer (14) to the second semiconductor memory 18. Here, the common key k2 memory area 70 and the S2 Code area 72 is inaccessible from outside, so that only the A Code area 66 and the A2 Code area 74 are accessible.

An explanation is made on the concrete boot processing with reference to flowcharts shown in Figure 16-Figure 28.

Figure 16-Figure 20 shows the flowchart showing the boot processing between the first information processing apparatus 12 (CPU 20) and the semiconductor memory 16, 18 (memory controlling circuit 40) in a case that the first information processing apparatus 12 is attached to the first semiconductor memory 16 or the second semiconductor memory 18. Here, in this embodiment, once that the first semiconductor memory 16 or the second semiconductor memory 18 is attached to the first information processing apparatus 12, the attached semiconductor memory (16,18) is not detached or replaced until the power of the first information processing apparatus 12 is turned off.

When the semiconductor memory 16, 18 is attached to the first information processing apparatus 12, and the power of the first information processing apparatus 12 is turned on to start the IPL, the CPU 20 of the first information processing apparatus 12 starts the boot processing, and transmits the RD_DATA command to the semiconductor memory 16, 18 in a step S1 as shown in Figure 16. Although illustration is omitted, as described above, at a time of the power is turned on, the semiconductor memory (16, 18) is set to the normal mode.

The memory controlling circuit 40 of the semiconductor memory 16, 18 receives the RD_DATA command from the first information processing apparatus 12 in a next step S3, and executes the RD_DATA command and transmits the data of the address designated by the RD_DATA command to the first information processing apparatus 12 in a step S5. Here, the memory controlling circuit 40 reads data from the address of the ROM 42 indicated by RD_DATA command and transmits the read data to the first information processing apparatus 12.

The CPU 20 of the first information processing apparatus 12 receives the data from semiconductor memory 16, 18 in a next step S7. Then, in a step S11, the encryption key data (common key k1 data, here) is generated from the reception data (encryption key original data) and the encryption generation data (first encryption generating data, here), and other processing is executed.

It should be noted that the other processing in the step S11 correspond to the initialization of the first information processing apparatus 12, and so on.

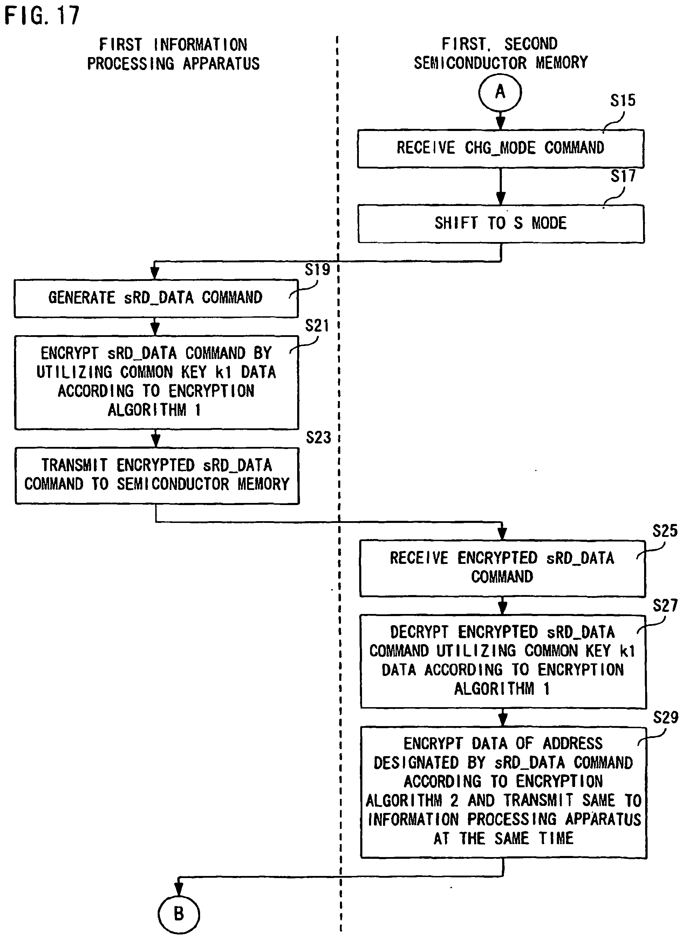

In a following step S13, the CPU 20 of the first information processing apparatus 12 transmits the CHG_MODE command to the semiconductor memory 16, 18. Thereupon, as shown in Figure 17, the memory controlling circuit 40 of the semiconductor memory 16, 18 receives the CHG_MODE command in a step S15, and shifts to the S MODE by executing the CHG_MODE command in a step S17. That is, in the semiconductor memory 16, 18, the S Code area 64 and the A Code area 66 are made accessible. Thereafter, the CPU 20 of the first information processing apparatus 12 generates the sRD_DATA command in a step S19, encrypts the sRD_DATA command by utilizing the common key k1 data according to the encryption algorithm 1 in a step S21, and transmits the encrypted sRD_DATA command to the semiconductor memory 16, 18 in a step S23.

The memory controlling circuit 40 of the semiconductor memory 16, 18 receives the encrypted sRD_DATA command in a next step S25, decrypts the encrypted sRD_DATA command by utilizing the common key k1 data according to the encryption algorithm 1 in a step S27, and executes the decrypted sRD_DATA command in a step S29. That is, in the step S29, the memory controlling circuit 40 of the semiconductor memory 16,18 encrypts the data of the address designated by the sRD_DATA command according to the encryption algorithm 2 and transmits the same to the first information processing apparatus 12 at the same time.

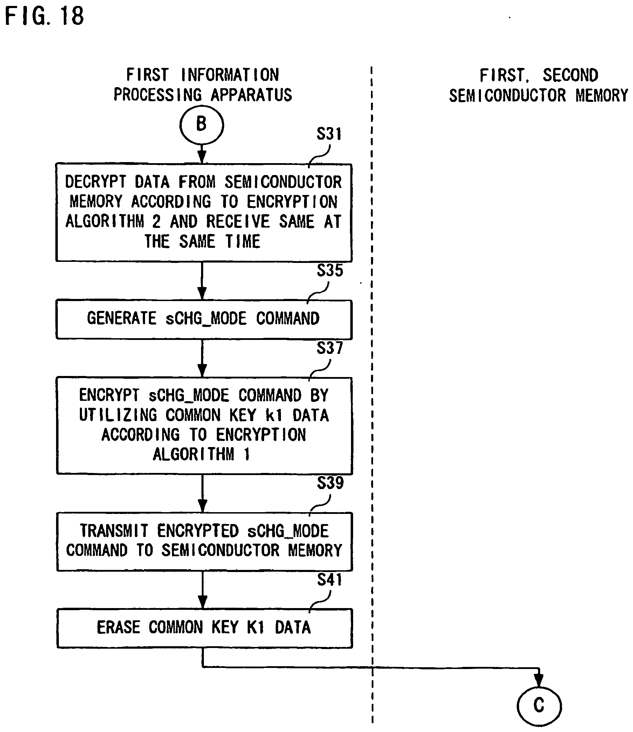

Succeedingly, as shown in Figure 18, the CPU 20 of the first information processing apparatus 12 decrypts the data from the semiconductor memory 16, 18 according to the encryption algorithm 2 and receives the same at the same time in a step S31. Here, the content data stored in the S Code area 64 is received. Next, the CPU 20 of the first information processing apparatus 12 generates the sCHG_MODE command in a step S35, and encrypts the sCHG_MODE command by utilizing the common key k1 data according to the encryption algorithm 1 in a step S37.

Then, the CPU 20 of the first information processing apparatus 12 transmits the encrypted sCHG_MODE command to the semiconductor memory 16, 18 in a step S39, and then erases the common key k1 data from the RAM 24 in a step S41. The reason why the common key k1 data is erased is that if there is an unlawful access to the RAM 24, the risk of the common key k1 data being read is made as low as possible. That is, when the common key k1 data becomes unnecessary, it is erased. This holds true for the common key k2 data described later.

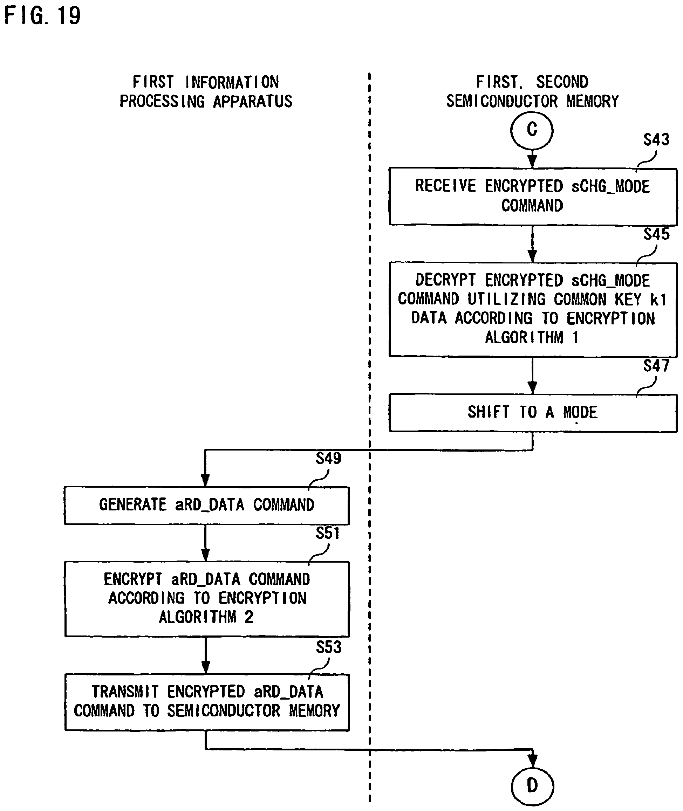

As shown in Figure 19, the memory controlling circuit 40 of the semiconductor memory 16, 18 receives the encrypted sCHG_MODE command in a step S43, decrypts the encrypted sCHG_MODE command by utilizing the common key k1 data according to the encryption algorithm 1 in a step S45, and shifts to the A MODE by executing the decrypted sCHG_MODE command in a step S47. That is, in the semiconductor memory 16, 18, only the A Code area 66 is made accessible.

Thereafter, the CPU 20 of the first information processing apparatus 12 generates the aRD_DATA command in a step S49, encrypts the aRD_DATA command according to the encryption algorithm 2 in a step S51, and transmits the encrypted aRD_DATA command to the semiconductor memory 16, 18 in a step S53.

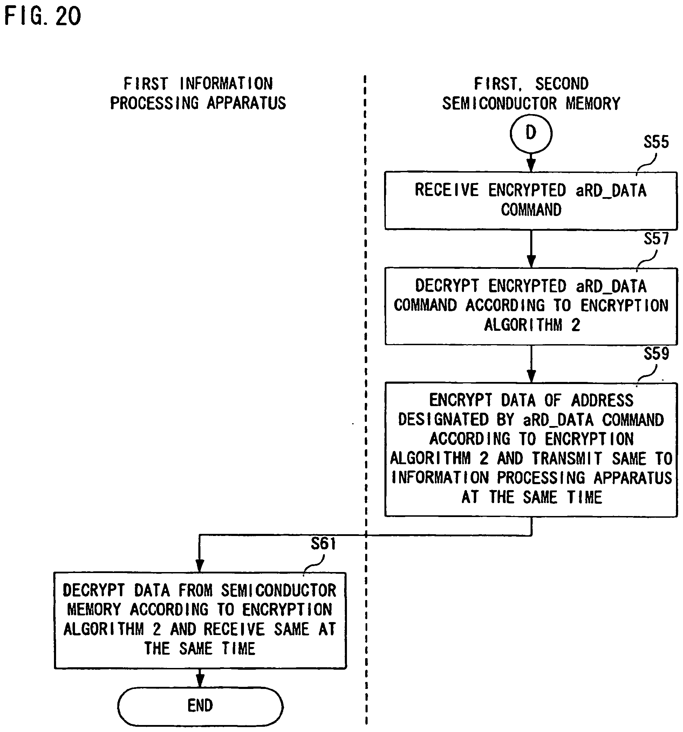

Thereupon, as shown in Figure 20, the memory controlling circuit 40 of the semiconductor memory 16, 18 receives the encrypted aRD_DATA command in a step S55, decrypts the encrypted aRD_DATA command according to the encryption algorithm 2 in a step S57, and encrypts the data of the address designated by the aRD_DATA command according to the encryption algorithm 2 by executing the decrypted aRD_DATA command and transmits the same to the first information processing apparatus 12 at the same time in a step S59.

Accordingly, the CPU 20 of the first information processing apparatus 12 decrypts the data from the semiconductor memory 16, 18 according to the encryption algorithm 2 and receives the same at the same time in a step S61, and ends the boot processing.

Furthermore, Figure 21-Figure 28 shows the flowchart showing the boot processing in a case that the first semiconductor memory 16 or the second semiconductor memory 18 is attached to the second information processing apparatus 14. Similar to the above-described case, once that the semiconductor memory 16, 18 is attached to the second information processing apparatus 14, the semiconductor memory 16, 18 is never detached or replaced until the power of the second information processing apparatus 14 is turned off.

The processing the same as the boot processing shown in Figure 16-Figure 20 out of the boot processing shown in Figure 21-Figure 28 is explained briefly.

When the semiconductor memory 16, 18 is attached, the power of the second information processing apparatus 14 is turned on to start the IPL, the CPU 20 of the second information processing apparatus 14 starts the boot processing, and transmits the RD_DATA command to the semiconductor memory 16, 18 in a step S101 as shown in Figure 21. Thereupon, the memory controlling circuit 40 of the semiconductor memory 16, 18 receives the RD_DATA command in a step S103, and transmits the data of the address designated by the RD_DATA command to the second information processing apparatus 14 in a step S105.

Next, the CPU 20 of the second information processing apparatus 14 receives the data from the semiconductor memory 16, 18 in a step S107, and generates the encryption key data (common key k1 data) from the reception data (encryption key original data) and the encryption generation data (first encryption generating data) and executes other processing in a step S111.

Then, the CPU 20 of the second information processing apparatus 14 determines whether or not the second semiconductor memory 18 is attached in a step S113. More specifically, it is determined whether the first semiconductor memory 16 is attached, or the second semiconductor memory 18 is attached from the identification information of the semiconductor memory received by the processing in the step S107. For example, in a case of the first semiconductor memory 16, "00" is stored as identification information, and in a case of the second semiconductor memory 18, "10" is stored as identification information.

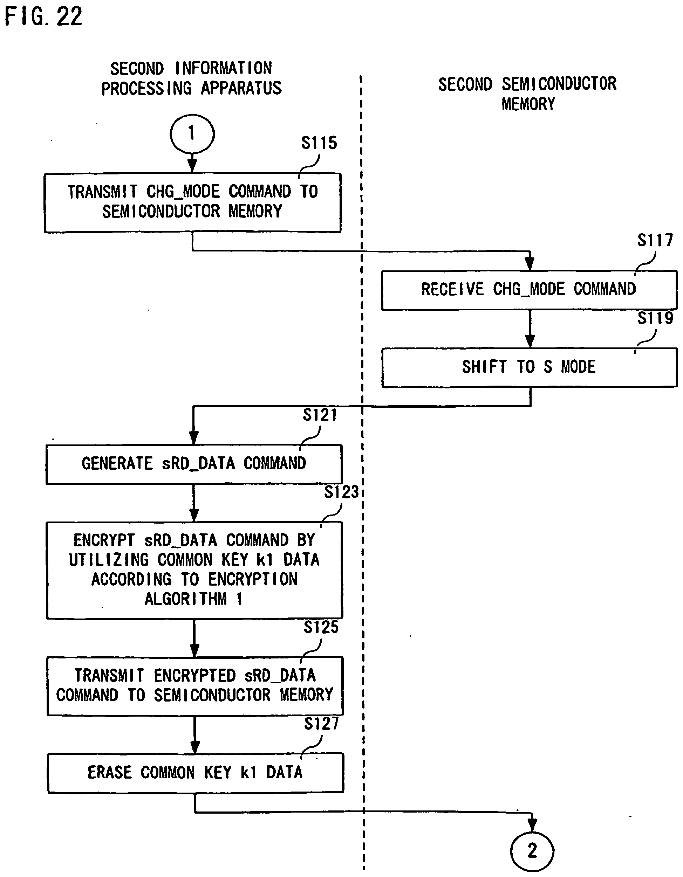

If "NO" in the step S113, that is, if the first semiconductor memory 16 is attached, the boot processing from the step S13 shown in Figure 16 to the step S61 shown in Figure 20 is executed. On the other hand, if "YES" in the step S113, that is, if the second semiconductor memory 18 is attached, the CHG_MODE command is transmitted to the second semiconductor memory 18 in a step S115 as shown in Figure 22.

It should be noted that the boot processing after the step S115 onward is executed only when the second semiconductor memory 18 is attached to the second information processing apparatus 14.

Next, the memory controlling circuit 40 of the second semiconductor memory 18 receives the CHG_MODE command in a step S117, and shifts to the S MODE by executing the CHG_MODE command in a step S119. Although illustration is omitted, the end address of the reading range is set to the boundary address by the address converting circuit 48 at this time. Then, the CPU 20 of the second information processing apparatus 14 generates the sRD_DATA command in a step S121, encrypts the sRD_DATA command by utilizing the common key k1 data according to the encryption algorithm 1 in a step S123, transmits the encrypted sRD_DATA command to the second semiconductor memory 18 in a step S125, and erases the common key k1 data from the RAM 24 in a step S127.

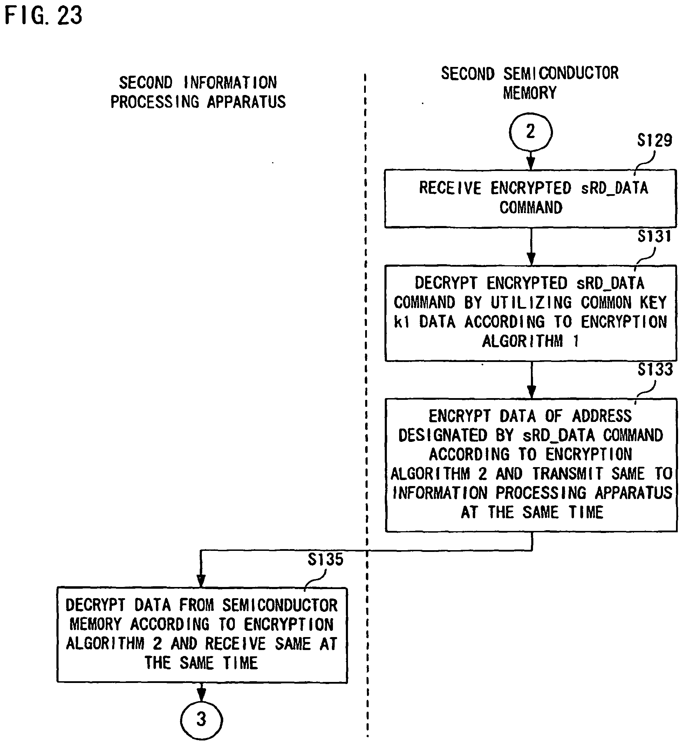

Succeedingly, as shown in Figure 23, the memory controlling circuit 40 of the second semiconductor memory 18 receives the encrypted sRD_DATA command in a step S129, decrypts the encrypted sRD_DATA command by utilizing the common key k1 data according to the encryption algorithm 1 in a step S131, and encrypts the data of the address designated by the sRD_DATA command according to the encryption algorithm 2 by executing the decrypted sRD_DATA command and transmits the same to the second information processing apparatus 14 at the same time in a step S133.

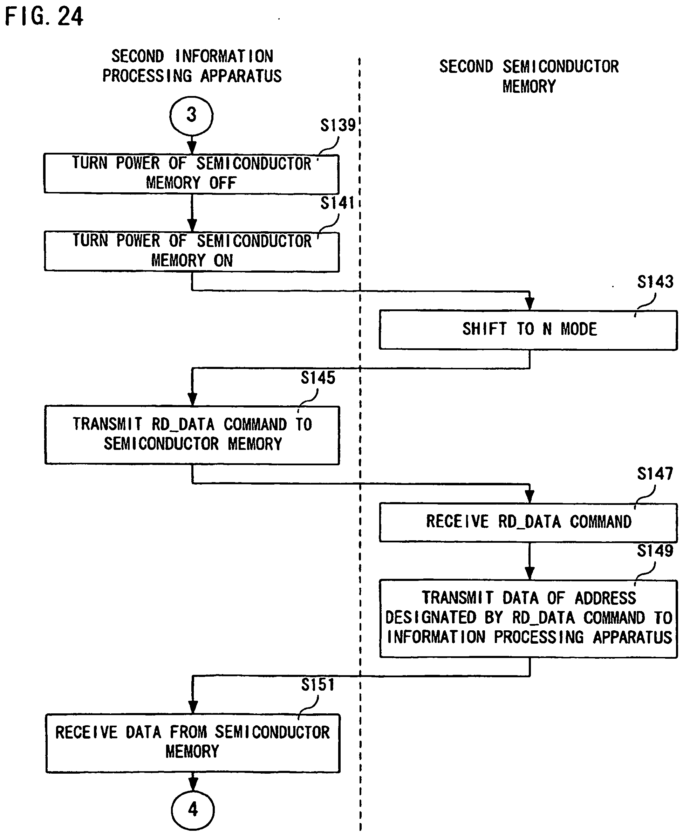

The CPU 20 of the second information processing apparatus 14 decrypts the data from the second semiconductor memory 18 according to the encryption algorithm 2 and receives the same at the same time in a next step S135, turns the power of the second semiconductor memory 18 off in a step S139 shown in Figure 24, and turns the power of the second semiconductor memory 18 on in a step S141. Thereupon, the memory controlling circuit 40 of the second semiconductor memory 18 shifts to the N MODE in a step S143.

Here, as described above, by resetting the second semiconductor memory 18, the normal mode may be set again.

Then, the CPU 20 of the second information processing apparatus 14 transmits the RD_DATA command to the second semiconductor memory 18 in a step S145. The command controlling circuit 40 of the second semiconductor memory 18 receives the RD_DATA command in a step S147, and transmits the data of the address designated by the RD_DATA command to the second information processing apparatus 14 by executing the RD_DATA command in a step S149.

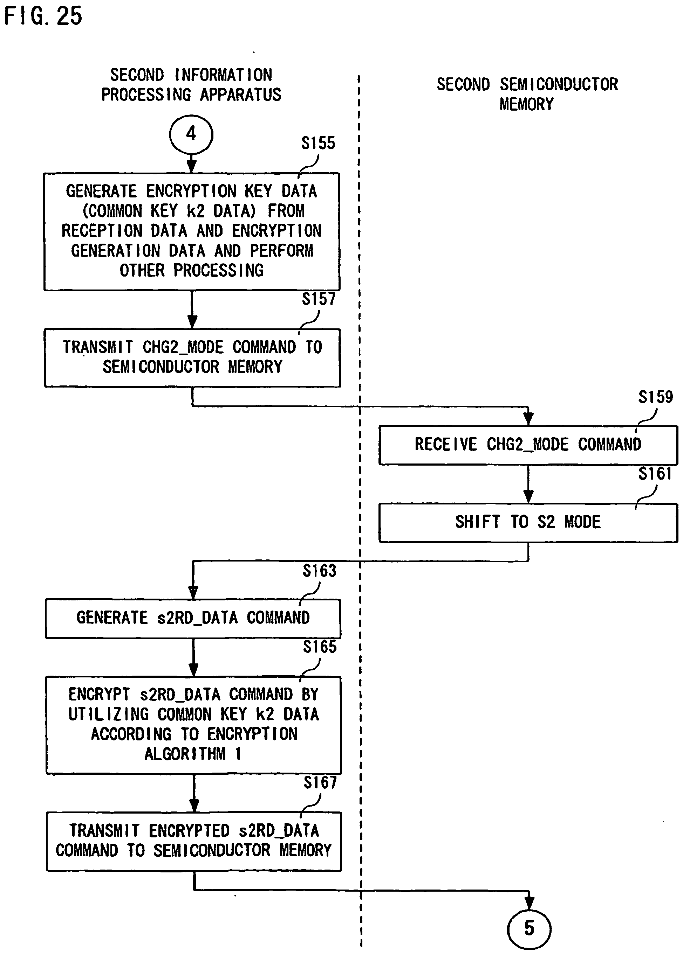

Accordingly, the CPU 20 of the second information processing apparatus 14 receives the data from the second semiconductor memory 18 in a step S151, and generates the encryption key data (common key k2 data, here) from the reception data (encryption key original data) and the encryption generation data (second encryption generating data, here), and executes other processing in a step S155 shown in Figure 25. Then, the CPU 20 of the second information processing apparatus 14 transmits the CHG2_MODE command to the second semiconductor memory 18 in a step S157.

The memory controlling circuit 40 of the second semiconductor memory 18 receives the CHG2_MODE command in a step S159, and shifts to the S2 MODE by executing the CHG2_MODE command in a step S161. That is, in the second semiconductor memory 18, the A Code area 66, the S2 Code area 72 and the A2 Code area 74 are made accessible. At this time, the data of the S2 Code area 72 is moved to the S Code area 64 by the address converting circuit 48. Then, the CPU 20 of the second information processing apparatus 14 generates the s2RD_DATA command in a next step S163, encrypts the s2RD_DATA command by utilizing the common key k2 data according to the encryption algorithm 1 in a step S165, and transmits the encrypted s2RD_DATA command to the second semiconductor memory 18 in a step S167.

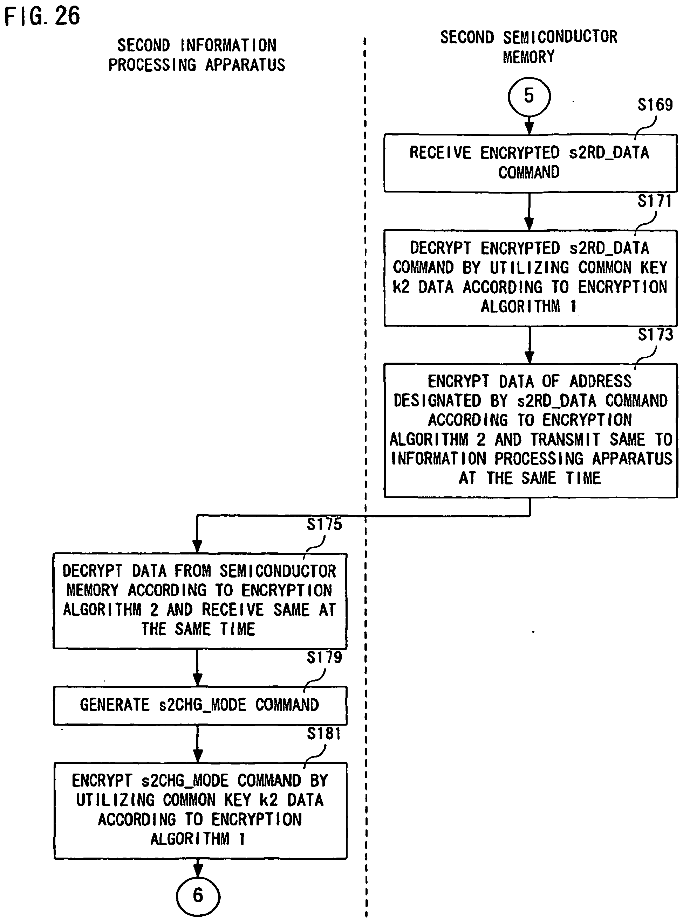

Thereupon, as shown in Figure 26, the memory controlling circuit 40 of the second semiconductor memory 18 receives the encrypted s2RD_DATA command in a step S169, decrypts the encrypted s2RD_DATA command by utilizing the common key k2 data according to the encryption algorithm 1 in a step S171, and encrypts the data of the address designated by the s2RD_DATA command by executing the decrypted s2RD_DATA command according to the encryption algorithm 2 and transmits the same to the second information processing apparatus 14 at the same time in a step S173.

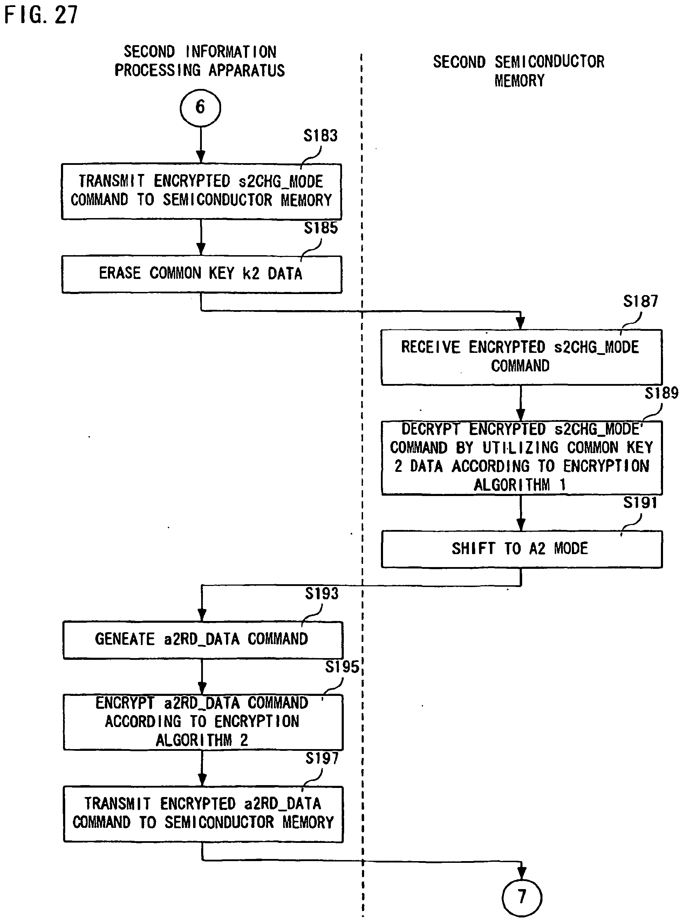

Accordingly, the CPU 20 of the second information processing apparatus 14 decrypts the data from the second semiconductor memory 18 according to the encryption algorithm 2 and receives the same at the same time in a step S175. Here, the content data stored in the S2 Code area 72 is received. Next, the CPU 20 of the second information processing apparatus 14 generates the s2CHG_MODE command in a step S179, encrypts the s2CHG_MODE command by utilizing the common key k2 data according to the encryption algorithm 1 in a step S181, transmits the encrypted s2CHG_MODE command to the second semiconductor memory 18 in a step S183 shown in Figure 27, and erases the common key k2 data from the RAM 24 in a step S185.

Succeedingly, the memory controlling circuit 40 of the second semiconductor memory 18 receives the encrypted s2CHG_MODE command in a step S187, decrypts the encrypted s2CHG_MODE command by utilizing the common key k2 data according to the encryption algorithm 1 in a step S189, and shifts to the A2 MODE by executing the decrypted s2CHG_MODE command in a step S191. That is, in the second semiconductor memory 18, the A Code area 66 and the A2 Code area 74 are made accessible.

Then, the CPU 20 of the second information processing apparatus 14 generates the a2RD_DATA command in a step S193, encrypts the a2RD_DATA command according to the encryption algorithm 2 in a step S195, and transmits the encrypted a2RD_DATA command to the second semiconductor memory 18 in a step S197.

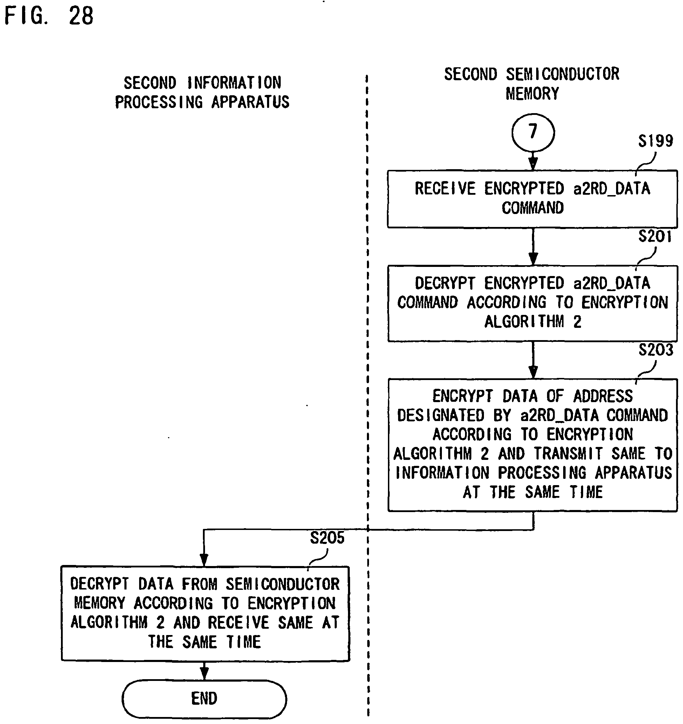

As shown in Figure 28, the memory controlling circuit 40 of the second semiconductor memory 18 receives the encrypted a2RD_DATA command in a next step S199, decrypts the encrypted a2RD_DATA command according to the encryption algorithm 2 in a step S201, and encrypts the data of the address designated by the a2RD_DATA command according to the encryption algorithm 2 by executing the decrypted a2RD_DATA command and transmits the same to the second information processing apparatus 14 at the same time in a step S203.

Thereupon, the CPU 20 of the second information processing apparatus 14 decrypts the data from the second semiconductor memory 18 according to the encryption algorithm 2 and receives the same at the same time in a step S205. Here, the content data stored in the A Code area 66 and the A2 Code area 74 are received. Then, the CPU 20 of the second information processing apparatus 14 ends the boot processing.

According to this embodiment, the second semiconductor memory is configured inclusive of the first semiconductor memory, the S2 Code area and the A2 Code area of the second semiconductor memory are made readable in only the second information processing apparatus being compatible with the first information processing apparatus, and therefore, a relatively large number of parts can be shared in the memory controlling circuit and the semiconductor memory, capable of ensuring high security by keeping costs related to the development, such as times and costs included in the development, as low as possible.

Moreover, in this embodiment, a command is encrypted in the secure mode, and therefore, even if an unlawful access occurs, it is possible to prevent the command from being deciphered.

In the above-described embodiment, the second semiconductor memory is configured to be attached to (attached to and detached from) the first information processing apparatus, but the second semiconductor memory may be configured to be attached to only the second information processing apparatus. Or, the second semiconductor memory is configured to be attached to (attached to and detached from) the first information processing apparatus, but the first information processing apparatus may be configured so as to be inaccessible to the second semiconductor memory.

Although the present invention has been described and illustrated in detail, it is clearly understood that the same is by way of illustration and example only and is not to be taken by way of limitation, the scope of the present invention being limited only by the terms of the appended claims.

## Claims

1. An information processing system (10) having a first information processing apparatus (12) and a first storage medium (16) capable of being attached to and detached from said first information processing apparatus (12) is **characterized by** comprising a second information processing apparatus (14) being compatible with said first information processing apparatus (12) and detachable with said first storage medium (16) and a second storage medium (18) capable of being attached to and detached from at least said second information processing apparatus (14) and being different from said first storage medium (16), wherein said first information processing apparatus (12) comprises:
a first issuing means (S35, S37, S39) for encrypting a first content mode shifting command to shift to a first content mode allowing access to content data stored in said first storage medium (16) and said second storage medium (18) which are being attached to said first information processing apparatus by utilizing first key data, and issuing said first content mode shifting command to said first storage medium (16) and said second storage medium (18); and
a first receiving means (S1, S7, S19, S21, S23, S31, S49, S51, S53, S61) for issuing a reading command to said first storage medium (16) or said second storage medium (18) which is being attached to said first information processing apparatus by executing a first predetermined program, and receiving read data output from said first storage medium (16) or said second storage medium (18),
said first storage medium (16) comprises:
a first key data memory area (42c, 62) for storing said first key data;
a first content data memory area (42b, 66) for storing first content data; and
a first controller (40) for, when the encrypted first content mode shifting command from said first information processing apparatus (12) and said second information processing apparatus (14) to which said first storage medium is being attached is received, shifting to said first content mode by decrypting the encrypted first content mode shifting command by utilizing said first key data and executing the decrypted first content mode shifting command, and for, when the reading command with respect to the first content data memory area (42b, 66) is received from said first information processing apparatus (12) and said second information processing apparatus (14) to which said first storage medium (16) is being attached, not responding to the reading command before shifting to said first content mode and outputting said read data to said first information processing apparatus (12) and said second information processing apparatus (14) after shifting to the first content mode,
said second information processing apparatus (14) comprises:
a medium determining means (S113) for determining whether the attached storage medium (16, 18) is said first storage medium (16) or said second storage medium (18);
a second issuing means (S35, S37, S39, S179, S181, S183) for, when said medium determining means (S113) determines to be said first storage medium (16), encrypting said first content mode shifting command to shift to the first content mode by utilizing said first key data, and issuing the encrypted first content mode shifting command to said first storage medium (16), and for, when said medium determining means (S113) determines to be said second storage medium (18), encrypting a second content mode shifting command to shift to a second content mode by utilizing second key data different from said first key data, and issuing the encrypted second content mode shifting command to said second storage medium (18); and
a second receiving means (S19, S21, S23, S31, S49, S51, S53, S61, S101, S107, S121, S123, S125, S135, S145, S151, S163, S165, S167, S175, S193, S195, S197, S205) for issuing a reading command to said first storage medium (16) or said second storage medium (18) which is being attached to said second information processing apparatus by executing a second predetermined program different from said first predetermined program, and receiving read data output from said first storage medium (16) or said second storage medium (18), and
said second storage medium (18) compromises:
a second key data memory area (42c, 70) for storing said second key data;
a second content data memory area (42b, 74) for storing second content data; and
a second controller (40) for, when the encrypted second content mode shifting command is received from said second information processing apparatus (14) to which said second storage medium (18) is being attached, shifting to said second content mode by decrypting said encrypted second content mode shifting command by utilizing said second key data and executing the decrypted second mode shifting command, and for, when the reading command with respect to said second content data memory area is received from said second information processing apparatus (14) to which said second storage medium (18) is being attached, not responding to the reading command before shifting to the second content mode, and outputting read data to said second information processing apparatus (14) after shifting to the second content mode.

2. An information processing system (10) according to claim 2, wherein
said second storage medium (18) is also attachable to said first information processing apparatus (12), and further comprises a first key data memory area (42c, 62) for storing said first key data, said first issuing means (S35, S37, S39) of said first information processing apparatus (12) issues a first encryption mode shifting command to shift to a first encryption mode for encrypting and transmitting and receiving a command and data with said first storage medium (16) and said second storage medium (18), and then issues said first content mode shifting command,
said first controller (40) of said first storage medium (16) shifts to said first encryption mode by executing said first encryption mode shifting command, and shifts to said first content mode by decrypting the received encrypted first content mode shifting command by utilizing said first key data and executing the decrypted first content mode shifting command in said first encryption mode,
said second issuing means (S35, S37, S39, S179, S181, S183) of said second information processing apparatus (14) issues the first encryption mode shifting command to shift to said first encryption mode when said first storage medium (16) is attached to said second information processing apparatus (14), and issues a second encryption mode shifting command to shift to a second encryption mode when said second storage medium (18) is attached to said second information processing apparatus (14),
said second controller (40) of said second storage medium (18) shifts to said first encryption mode by receiving and executing said first encryption mode shifting command, shifts to said first content mode by decrypting the received encrypted first content mode shifting command by utilizing said first key data and executing the decrypted first content mode shifting command in said first encryption mode, or shifts to said second encryption mode by receiving and executing said second encryption mode shifting command, and shifts to said second content mode by decrypting the received encrypted second content mode shifting command by utilizing said second key data and executing the decrypted second content mode shifting command in said second encryption mode.

3. An information processing system (10) according to claim 2, wherein
said first information processing apparatus (12) issues said first content mode shifting command to shift to said first content mode,
said second information processing apparatus (14) issues said first content mode shifting command to shift to said first content mode when said first storage medium (16) is attached to said second information processing apparatus (14), or issues said second content mode shifting command to shift to said second content mode when said second storage medium (18) is attached to said second information processing apparatus (14), and
said second controller (40) of said second storage medium (18), when said first content mode shifting command is received, shifts to said first content mode by decrypting said first content mode shifting command by utilizing said first key data and executing the decrypted first content mode shifting command, or when said second content mode shifting command is received, shifts to said second content mode by decrypting said second content mode shifting command by utilizing said second key data and executing the decrypted second content mode shifting command.

4. An information processing system (10) according to claim 2 or 3, wherein said first key data memory area (42c, 62) of said first storage medium (16) and said first key data memory area (42c, 62) of said second storage medium (18) are set to an identical start address.

5. An information processing system (10) according to any one of claims 2 to 4, wherein
second content data includes third content data and fourth content data,
said second content data memory area (42b, 74) of said second storage medium (18) includes a third content data memory area (66) to store the third content data and a fourth content data memory area (74) to store the fourth content data, and
said second controller (40), when said first content mode shifting command is received, shifts to said first content mode by decrypting said first content mode shifting command by utilizing said first key data and executing the decrypted first content mode shifting command to make said third content data memory area (66) readable, or, when said second content mode shifting command is received shifts to said second content mode by decrypting said second content mode shifting command by utilizing said second key data and executing the decrypted second content mode shifting command to make said fourth content data memory area (74) readable.

6. An information processing system (10) according to claim 5, wherein said
second controller (40) of said second storage medium (18) makes said third content data memory area (66) and said fourth content data memory area (74) readable in said second content mode.

7. An information processing system (10) according to claim 5 or 6, wherein
said third content data memory area (66) of said second storage medium (18) stores a first program being executable by said first information processing apparatus (12), and
said fourth content data memory area (74) of said second storage medium (18) stores a second program being unexecutable by said first information processing apparatus (12) and being executable by said second information processing apparatus (14).

8. An information processing system (10) according to any one of claims 5 to 7, wherein said first content data memory area (42b, 66) of said first storage medium (16) and said third content data memory area (66) of said second storage medium (18) are set to an identical start address.

9. An information processing system (10) according to claim 8, wherein
said first content data memory area (42b, 66) of said first storage medium (16) is a memory area after a first address onward,
said third content data memory area (66) of said second storage medium (18) is a memory area after said first address to a second address, and
said fourth content data memory area (74) of said second storage medium (18) is a memory area after said second address onward, wherein
said second address is variable.

10. An information processing system (10) according to claim 9, wherein information of said second address is stored in a predetermined area (60) of said second storage medium (18).

11. An information processing system (10) according to any one of claims 5 to 10, wherein said second controller (40) of said second information processing apparatus (14) accepts a first reading command in said first content mode, or accepts a second reading command in said second content mode.

12. An information processing system (10) according to claim 11, wherein the reading command in said first content mode of said first controller (40) of said first storage medium (16) and the reading command in said first content mode of said second controller (40) of said second storage medium (18) are identical.

13. An information processing system (10) according to claim 1, wherein
said first controller (40) of said first storage medium (16) is started in a non-encryption mode not requiring decryption of the received command, then shifts to an encryption mode in response to a command from said first information processing apparatus (12) to which said first storage medium (16) is being attached, and receives the encrypted first content mode shifting command from said first information processing apparatus (12) in said encryption mode,
said second controller (40) of said second storage medium (18) is started in a non-encryption mode not requiring decryption of the received command, then shifts to an encryption mode in response to a command from said second information processing apparatus (14) to which said second storage medium (18) is being attached, and receives the encrypted second content mode shifting command from said second information processing apparatus (14) in said encryption mode.

14. An information processing system (10) according to claim 13, wherein
said second storage medium (18) further comprises a first key data memory area (42c, 62) storing said first key data,
said first controller (40) of said first storage medium (16) has a first encryption mode, and is capable of executing said first content mode shifting command in said first encryption mode, and
said second controller (40) of said second storage medium (18) has said first encryption mode and a second encryption mode, and is capable of executing said first content mode shifting command in said first encryption mode by decrypting the encrypted first content mode shifting command by utilizing said first key data upon receipt of said encrypted first content mode shifting command from said second information processing apparatus (14), and is capable of executing a second content mode shifting command in said second encryption mode.

15. An information processing system (10) according to claim 14, wherein
said first storage medium (16) has a first secure area (64) being accessible in only said first encryption mode,
said second storage medium (18) has said first secure area (64) being accessible in only said first encryption mode and a second secure area (72) being accessible in only said second encryption mode, and said second information processing apparatus (14) issues said first encryption mode shifting command by said second issuing means (S35, S37, S39, S179, S181, S183) irrespective of the attached storage medium (16, 18) being said first storage medium (16) or said second storage medium (18) to read the data of said first secure area (64), and, in a case that the attached storage medium (16, 18) is said second storage medium (18), then issues said second encryption mode shifting command by said second issuing means (S35, 837, S39, S179, S181, S183) to read the data of said second secure area (72), and further issues said second content mode shifting command.

16. An information processing system (10) according to claim 15. wherein said second issuing means (S35, S37, S39, S279, S181, S183), in a case that attached storage medium (16, 18) is said second storage medium (18), reads the data of said first secure area (64) and then controls turning on or off of the power of said second storage medium (18), or resets said second controller (40).

17. An information processing system (10) according to claim 1, wherein
said second storage medium (18) further includes an identification information memory area (60) to store identification information of itself, and
said second information processing apparatus (14) determines whether or not the attached storage medium (16, 18) is said second storage medium (18) depending on the presence or absence of said identification information.

18. An information processing system (10) according to claim 17, wherein
said second information processing apparatus (14) issues, on start-up, a reading command of said identification information stored in said identification information memory area (60) to said first storage medium (16) and said second storage medium (18) which are being attached to said second information processing apparatus (14), and
said second controller (40) of said second storage medium (18) is, on start-up, accessible to said identification information memory area (60), but inaccessible to said first secure area (64) and said second secure area (72).

19. An information processing system (10) according to claim 1, wherein said first key data memory area (42c, 62) and said second key data memory area (42c, 70) are inaccessible from outside.

20. An information processing system (10) according to claim 1, wherein said first information processing apparatus (12) and said second information processing apparatus (14) generate key data from encryption key original data read from said first storage medium (16) and said second storage medium (18) and encryption generation data stored inside said first information processing apparatus (12) and said second information processing apparatus (14).

21. An information processing apparatus (14) being configured to be detachable with a first storage medium (16) having a first content data memory area (42b, 66) storing first content data, and a second storage medium (18) having a second content data memory area (42b, 74) storing second content data, comprising:
a medium determining means (S113) for determining whether said first storage medium (16) is attached or said second medium (18) is attached to said information processing apparatus (14);
a first issuing means (S35, S37, S39) for, when said medium determining means determines that said first storage medium (16) is attached, encrypting a first content mode shifting command to shift to a first content mode allowing for access to said first content data stored in said first content data memory area (42b, 66) by utilizing first key data, and issuing the encrypted first content mode shifting command to said first storage medium (16);a first receiving means (S1, S7, S19, S21, S23, S31, S49, S51, S53, S61) for receiving first read data output from said first storage medium (16) in response to the first content mode shifting command being issued by said first issuing means (S35, S37, S39);
a second issuing means (S35, S37, S39, S179, S181, S183) for, when said medium determining means (S113) determines that said second storage medium (18) is attached, encrypting a second content mode shifting command to shift to a second content mode allowing for access to said second content data stored in said second content data memory area (42b, 74) by utilizing second key data different from said first key data, and issuing the encrypted second content mode shifting command to said second storage medium (18); and
a second receiving means (S19, S21, S23, S31, S49, S51, S53, S61, S101, S107, S121, S123, S125, S135, S145, S151, S163, S165, S167, S175, S193, S195, S197, S205) for receiving second read data output from said second storage medium (18) in response to the second content mode shifting command issued by said second issuing means (S35, S37, S39, S179, S181, S183).

22. An information processing method of an information. processing apparatus (14) being configured to be detachable with a first storage medium (16) having a first content data memory area (42b, 66) storing at least first content data and further being configured to be detachable with a second storage medium (18) having the first content data memory area (42b, 66) and a second content data memory area (42b, 74) storing second content data, the information processing method comprising the steps of:
(a) determining whether said first storage medium (16) is attached or said second storage medium (18) is attached to said information processing apparatus (14) (S113);
(b) encrypting a first content mode shifting command to shift to a first content mode allowing for access to said first content data stored in said first content data memory area (42b, 66) by utilizing first key data, and issuing (S35, S37, S39) the encrypted first content mode shifting command to said first storage medium (16) when said step (a) determines that said first storage medium (16) is attached;
(c) receiving first read data output from said first storage medium (16) in response to the first content mode shifting command being issued by said step (b) (S1, S7, S19, S21, S23, S31, S49, S51, S53, S61); or
(d) encrypting a second content mode shifting command to shift to a second content mode allowing for access to said second content data stored in said second content data memory area (42b, 74) by utilizing second key data different from said first key data, and issuing (S35, S37, S39, S179, S181, S183) the encrypted second content mode shifting command to said second storage medium (18) when said step (a) determines that said second storage medium (18) is attached; and
(e) receiving second read data output from said first (42b, 66) or second (42b, 74) content memory area of said second storage medium (18) in response to the second content mode shifting command issued by said step (d) (S19, S21, S23, S31, S49, S51, S53, S61, S101, S107, S121, S123, S125, S135, S145, S151, S163, S165, S167, S175, S193, S195, S197, S205).

23. A storage medium (16, 18) storing an information processing program comprising computer program code to execute the method of claim 22 when the program is executed by the computer of an information processing apparatus in accordance with claim 21.

## Patentansprüche

1. Ein Informationsverarbeitungssystem (10) mit einer ersten informationsverarbeiteten Einrichtung (12) und einem ersten Speichermedium (16), das an die genannte erste Informationsverarbeitungseinrichtung (12) angeschlossen und davon getrennt werden kann, ist dadurch charakterisiert, dass es eine zweite Informationsverarbeitungseinrichtung (14) enthält, die mit der genannten ersten Informationsverarbeitungseinrichtung (12) kompatibel ist und vom genannten ersten Speichermedium (16) getrennt werden kann, und ein zweites Speichermedium (18), das mindestens an die genannte zweite Informationsverarbeitungseinrichtung (14) angeschlossen und davon getrennt werden kann und das sich vom genannten ersten Speichermedium (16) unterscheidet, worin die genannte erste Informationsverarbeitungseinrichtung (12) enthält:
ein erstes Ausgabemittel (S35, S37, S39) zum Verschlüsseln eines ersten Inhaltsmodus-Umschaltbefehls, um in einen ersten Inhaltsmodus umzuschalten, der den Zugriff zu Inhaltsdaten erlaubt, die im genannten ersten Speichermedium (16) und im genannten zweiten Speichermedium (18) enthalten sind, die an die genannte erste Informationsverarbeitungseinrichtung angeschlossen sind, unter Verwendung erster Schlüsseldaten, und zum Ausgeben des genannten ersten Inhaltsmodus-Umschaltbefehls an das genannte erste Speichermedium (16) und das genannte zweite Speichermedium (18); und
ein erstes Empfangsmittel (S1, S7, S19, S21, S23, S31, S49, S51, S53, S61) zur Ausgabe eines Lesebefehls an das genannte erste Speichermedium (16) oder das genannte zweite Speichermedium (18), das an die genannte erste Informationsverarbeitungseinrichtung angeschlossen ist, durch Ausführen eines ersten vorbestimmten Programms und zum Empfangen von Lesedaten, die ausgegeben werden vom genannten ersten Speichermedium (16) oder vom genannten zweiten Speichermedium (18),
wobei das genannte erste Speichermedium (16) enthält:
einen ersten Schlüsseldaten-Speicherbereich (42c, 62) zum Speichern der genannten ersten Schlüsseldaten;
einen ersten Inhaltsdaten-Speicherbereich (42b, 66) zum Speichern erster Inhaltsdaten; und
einen ersten Controller (40) zum, wenn der verschlüsselte erste Inhaltsmodus-Umschaltbefehl von der genannten ersten Informationsverarbeitungseinrichtung (12) und der genannten zweiten Informationsverarbeitungseinrichtung (14) erhalten wird, die an das genannte erste Speichermedium angeschlossen sind, Umschalten zum genannten ersten Inhaltsmodus durch Entschlüsseln des verschlüsselten ersten Inhaltsmodus-Umschaltbefehls unter Verwendung der genannten ersten Schlüsseldaten und Ausführen des entschlüsselten ersten Inhaltsmodus-Umschaltbefehls, und zum, wenn der Lesebefehl bezüglich des ersten Inhaltsdaten-Speicherbereichs (42b, 66) empfangen wird von der genannten ersten Informationsverarbeitungseinrichtung (12) und der genannten zweiten Informationsverarbeitungseinrichtung (14), an die das genannte erste Speichermedium (16) angeschlossen ist, Nicht-Antworten auf den Lesebefehl, bevor in den genannten ersten Inhaltsmodus umgeschaltet ist und Ausgeben der genannten Lesedaten an die genannte erste Informationsverarbeitungseinrichtung (12) und die genannte zweite Informationsverarbeitung (14) nach dem Umschalten in den ersten Inhaltsmodus,
wobei die genannte zweite Informationsverarbeitungseinrichtung (14) enthält:
ein Medium-Feststellungsmittel (S113) zum Feststellen, ob das angeschlossene Speichermedium (16,18) das genannte erste Speichermedium (16) oder das genannte zweite Speichermedium (18) ist;
ein zweites Ausgabemittel (S35, S37, S39, S179, S181, S183) zum, wenn das genannte Medium-Feststellungsmittel (S113) feststellt, dass es das genannte erste Speichermedium (16) ist, Verschlüsseln des genannten ersten Inhaltsmodus-Umschaltbefehls, um in den ersten Inhaltsmodus umzuschalten unter Verwendung der genannten ersten Schlüsseldaten, und Ausgeben des verschlüsselten ersten Inhaltsmodus-Umschaltbefehls an das genannte erste Speichermedium (16), und zum, wenn das genannte Medium-Feststellungsmittel (S113) feststellt, dass es das zweite Speichermedium (18) ist, Verschlüsseln eines zweiten Inhaltsmodus-Umschaltbefehls, um in einen zweiten Inhaltsmodus umzuschalten unter Verwendung zweiter Schlüsseldaten, die sich von den genannten ersten Schlüsseldaten unterscheiden und Ausgeben des verschlüsselten zweiten Inhaltsmodus-Umschaltbefehls an das genannte zweite Speichermedium (18); und
ein zweites Empfangsmittel (S19, S21, S23, S31, S49, S51, S53, S61, S101, S107, S121, S123, S125, S135, S145, S151, S163, S165, S167, S175, S193, S195, S197, S205) zum Ausgeben eines Lesebefehls an das genannte erste Speichermedium (16) oder das genannte zweite Speichermedium (18), das an die genannte zweite Informationsverarbeitungseinrichtung angeschlossen ist, durch Ausführen eines zweiten vorbestimmten Programms, das sich vom genannten ersten vorbestimmten Programm unterscheidet, und Empfangen von Lesedaten, die vom genannten ersten Speichermedium (16) oder vom genannten zweiten Speichermedium (18) ausgegeben werden; und
worin das genannte zweite Speichermedium (18) enthält:
einen zweiten Schlüsseldaten-Speicherbereich (42c, 70) zum Speichern der genannten zweiten Schlüsseldaten;
einen zweiten Inhaltsdaten-Speicherbereich (42b, 74) zum Speichern zweiter Inhaltsdaten; und
einen zweiten Controller (40) zum, wenn der verschlüsselte zweite Inhaltsmodus-Umschaltbefehl von der genannten zweiten Informationsverarbeitungseinrichtung (14) erhalten wird, an die das genannte zweite Speichermedium (18) angeschlossen ist, Umschalten zum genannten zweiten Inhaltsmodus durch Entschlüsseln des genannten verschlüsselten zweiten Inhaltsmodus-Umschaltbefehls unter Verwendung der genannten zweiten Schlüsseldaten und Ausführen des entschlüsselten zweiten Modus-Umschaltbefehls, und zum, wenn der Lesebefehl bezüglich des genannten zweiten Inhaltsdaten-Speicherbereichs von der genannten zweiten Informationsverarbeitungseinrichtung (14) erhalten wird, an die das genannte zweite Speichermedium (18) angeschlossen ist, Nicht-Antworten auf den Lesebefehl, bevor in den zweiten Inhaltsmodus umgeschaltet ist, und Ausgeben der gelesenen Daten an die genannte zweite Informationsverarbeitungseinrichtung (14) nach dem Umschalten in den zweiten Inhaltsmodus.

2. Informationsverarbeitungssystem (10) gemäß Anspruch 1, worin
das genannte zweite Speichermedium (18) auch an die genannte erste Informationsverarbeitungseinrichtung (12) angeschlossen werden kann, und weiter enthält einen ersten Schlüsseldaten-Speicherbereich (42c, 62) zum Speichern der genannten ersten Schlüsseldaten, und das genannte erste Ausgabemittel (S35, S37, S39) der genannten ersten Informationsverarbeitungseinrichtung (12) einen ersten Verschlüsselungsmodus-Umschaltbefehl ausgibt, um in einen ersten Verschlüsselungsmodus umzuschalten zum Verschlüsseln und Übertragen und Empfangen eines Befehls und von Daten mit dem genannten ersten Speichermedium (16) und dem genannten zweiten Speichermedium (18), und dann den genannten ersten Inhaltsmodus-Umschaltbefehl ausgibt,
der genannte erste Controller (40) des genannten ersten Speichermediums (16) in den genannten ersten Verschlüsselungsmodus umschaltet, indem der genannte erste Verschlüsselungsmodus-Umschaltbefehl ausgeführt wird, und in den genannten ersten Inhaltsmodus umschaltet, indem der empfangene verschlüsselte erste Inhaltsmodus-Umschaltbefehl entschlüsselt wird unter Verwendung der genannten ersten Schlüsseldaten und Ausführen des entschlüsselten ersten Inhaltsmodus-Umschaltbefehls im genannten ersten Verschlüsselungsmodus,
das genannte zweite Ausgabemittel (S35, S37, S39, S179, S181, S183) der genannten zweiten Informationsverarbeitungseinrichtung (14) den ersten Verschlüsselungsmodus-Umschaltbefehl ausgibt, um in den genannten ersten Verschlüsselungsmodus umzuschalten, wenn das genannte erste Speichermedium (16) an die genannte zweite Informationsverarbeitungseinrichtung (14) angeschlossen ist, und einen zweiten Verschlüsselungsmodus-Umschaltbefehl ausgibt, um in einen zweiten Verschlüsselungsmodus umzuschalten, wenn das genannte zweite Speichermedium (18) an die genannte zweite Informationsverarbeitungseinrichtung (14) angeschlossen ist,
der genannte zweite Controller (40) des genannten zweiten Speichermediums (18) in den genannten ersten Verschlüsselungsmodus umschaltet durch Empfangen und Ausführen des genannten ersten Verschlüsselungsmodus-Umschaltbefehls, in den genannten ersten Inhaltsmodus umschaltet durch Entschlüsseln des empfangenen verschlüsselten ersten Inhaltsmodus-Umschaltbefehls unter Verwendung der genannten ersten Schlüsseldaten und Ausführen des entschlüsselten ersten Inhaltsmodus-Umschaltbefehls im genannten ersten Verschlüsselungsmodus, oder in den genannten zweiten Verschlüsselungsmodus umschaltet durch Empfangen und Ausführen des genannten zweiten Verschlüsselungsmodus-Umschaltbefehls, und in den genannten zweiten Inhaltsmodus umschaltet durch Entschlüsseln des empfangenen verschlüsselten zweiten Inhaltsmodus-Umschaltbefehls unter Verwendung der genannten zweiten Schlüsseldaten und Ausführen des entschlüsselten zweiten Inhaltsmodus-Umschaltbefehls im genannten zweiten Verschlüsselungsmodus.

3. Informationsverarbeitungssystem (10) gemäß Anspruch 2, worin
die genannte erste Informationsverarbeitungseinrichtung (12) den genannten ersten Inhaltsmodus-Umschaltbefehl ausgibt, um in den genannten ersten Inhaltsmodus umzuschalten,
die genannte zweite Informationsverarbeitungseinrichtung (14) den genannten ersten Inhaltsmodus-Umschaltbefehl ausgibt, um in den genannten ersten Inhaltsmodus umzuschalten, wenn das genannte erste Speichermedium (16) an die genannte zweite Informationsverarbeitungseinrichtung (14) angeschlossen ist, oder den genannten zweiten Inhaltsmodus-Umschaltbefehl ausgibt, um in den genannten zweiten Inhaltsmodus umzuschalten, wenn das genannte zweite Speichermedium (18) an die genannte zweite Informationsverarbeitungseinrichtung (14) angeschlossen ist, und
der genannte zweite Controller (40) des genannten zweiten Speichermediums (18) beim Empfang des genannten ersten Inhaltsmodus-Umschaltbefehls in den genannten ersten Inhaltsmodus umschaltet durch Entschlüsseln des genannten ersten Inhaltsmodus-Umschaltbefehl unter Verwendung der genannten ersten Schlüsseldaten und Ausführen des entschlüsselten ersten Inhaltsmodus-Umschaltbefehls, oder wenn der genannte zweite Inhaltsmodus-Umschaltbefehl empfangen wird, in den genannten zweiten Inhaltsmodus umschaltet durch Entschlüsseln des genannten zweiten Inhaltsmodus-Umschaltbefehl unter Verwendung der genannten zweiten Schlüsseldaten und Ausführen des entschlüsselten zweiten Inhaltsmodus-Umschaltbefehls.

4. Informationsverarbeitungssystem (10) gemäß Anspruch 2 oder 3, worin der genannte erste Schlüsseldaten-Speicherbereich (42c, 62) des genannten ersten Speichermediums (16) und der genannte erste Schlüsseldaten Speicherbereich (42c, 62) des genannten zweiten Speichermediums (18) auf eine identische Startadresse gesetzt sind.

5. Informationsverarbeitungssystem (10) gemäß einem der Ansprüche 2 bis 4, worin
die zweiten Inhaltsdaten enthalten dritte Inhaltsdaten und vierte Inhaltsdaten,
der genannte zweite Inhaltsdaten-Speicherbereich (42b, 74) des genannten zweiten Speichermediums (18) einen dritten Inhaltsdaten-Speicherbereich (66) enthält, um die dritten Inhaltsdaten zu speichern und einen vierten Inhaltsdaten-Speicherbereich (74) zum Speichern der vierten Inhaltsdaten, und
der genannte zweite Controller (40) beim Empfang des genannten ersten Inhaltsmodus-Umschaltbefehls in den genannten ersten Inhaltsmodus umschaltet durch Entschlüsseln des genannten ersten Inhaltsmodus-Umschaltbefehls unter Verwendung der genannten ersten Schlüsseldaten und Ausführen des entschlüsselten ersten Inhaltsmodus-Umschaltbefehls, um den genannten dritten Inhaltsdaten-Speicherbereich (66) lesbar zu machen, oder, wenn der genannte zweite Inhaltsmodus-Umschaltbefehl empfangen wird, in den zweiten Inhaltsmodus umschaltet durch Entschlüsseln des genannten zweiten Inhaltsmodus-Umschaltbefehls unter Verwendung der genannten zweiten Schlüsseldaten und Ausführen des entschlüsselten zweiten Inhaltsmodus-Umschaltbefehls, um den genannten vierten Inhaltsdaten-Speicherbereich (74) lesbar zu machen.

6. Informationsverarbeitungssystem (10) gemäß Anspruch 5, worin
der genannte zweite Controller (40) des genannten zweiten Speichermediums (18) den genannten dritten Inhaltsdaten-Speicherbereich (66) und den genannten vierten Inhaltsdaten-Speicherbereich (74) im genannten zweiten Inhaltsmodus lesbar macht.

7. Informationsverarbeitungssystem (10) gemäß Anspruch 5 oder 6, worin
der genannte dritte Inhaltsdaten-Speicherbereich (66) des genannten zweiten Speichermediums (18) ein erstes Programm speichert, das durch die genannte erste Informationsverarbeitungseinrichtung (12) ausführbar ist, und
der genannte vierte Inhaltsdaten-Speicherbereich (74) des genannten zweiten Speichermediums (18) ein zweites Programm speichert, das von der genannten ersten Informationsverarbeitungseinrichtung (12) nicht ausgeführt werden kann und von der genannten zweiten Informationsverarbeitungseinrichtung (14) ausführbar ist.

8. Informationsverarbeitungssystem (10) gemäß einem der Ansprüche 5 bis 7, worin der genannte erste Inhaltsdaten-Speicherbereich (42b, 66) des genannten ersten Speichermediums (16) und der genannte dritte Inhaltsdaten-Speicherbereich (66) des genannten zweiten Speichermediums (18) auf eine identische Startadresse gesetzt sind.

9. Informationsverarbeitungssystem (10) gemäß Anspruch 8, worin
der genannte erste Inhaltsdaten-Speicherbereich (42b, 66) des genannten ersten Speichermediums (16) ein Speicherbereich aufsteigend nach einer ersten Adresse ist,
der genannte dritte Inhaltsdaten-Speicherbereich (66) des genannten zweiten Speichermediums (18) ein Speicherbereich nach der genannten ersten Adresse bis zu einer zweiten Adresse ist, und
der genannte vierte Inhaltsdaten-Speicherbereich (74) des genannten zweiten Speichermediums (18) ein Speicherbereich aufsteigend nach der genannten zweiten Speicheradresse ist,
worin
die genannte zweite Adresse variabel ist.

10. Informationsverarbeitungssystem (10) gemäß Anspruch 9, worin die Information der genannten zweiten Adresse in einem vorbestimmten Bereich (60) des genannten zweiten Speichermediums (18) gespeichert ist

11. Informationsverarbeitungssystem (10) gemäß einem der Ansprüche 5 bis 10, worin der genannte Controller (40) der genannten zweiten Informationsverarbeitungseinrichtung (14) einen ersten Lesebefehl im genannten ersten Inhaltsmodus akzeptiert oder einen zweiten Lesebefehl im genannten zweiten Inhaltsmodus akzeptiert.

12. Informationsverarbeitungssystem (10) gemäß Anspruch 11, worin der Lesebefehl im genannten ersten Inhaltsmodus des genannten ersten Controllers (40) des genannten ersten Speichermediums (16) und der Lesebefehl im genannten ersten Inhaltsmodus des genannten zweiten Controllers (40) des zweiten Speichermediums (18) identisch sind.

13. Informationsverarbeitungssystem (10) gemäß Anspruch 1, worin der genannte erste Controller (40) des genannten ersten Speichermediums (16) in einem Nicht-Verschlüsselungs-Modus gestartet wird, der keine Entschlüsselung des empfangenen Befehls erfordert, dann in einen Verschlüsselungsmodus umschaltet als Antwort auf einen Befehl von der genannten ersten Informationsverarbeitungseinrichtung (12), an die das genannte erste Speichermedium (16) angeschlossen ist, und den verschlüsselten ersten Inhaltsmodus-Umschaltbefehl von der genannten ersten Informationsverarbeitungseinrichtung (12) im genannten Verschlüsselungsmodus empfängt,
der genannte zweite Controller (40) des genannten zweiten Speichermediums (18) in einem Nicht-Verschlüsselungs-Modus gestartet wird, der keine Entschlüsselung des empfangenen Befehls erfordert, dann in einen Verschlüsselungsmodus umschaltet als Antwort auf einen Befehl von der genannten zweiten Informationsverarbeitungseinrichtung (14), an die das genannte zweite Speichermedium (18) angeschlossen ist, und den verschlüsselten zweiten Inhaltsmodus-Umschaltbefehl von der genannten zweiten Informationsverarbeitungseinrichtung (14) im genannten Verschlüsselungsmodus empfängt.

14. Informationsverarbeitungssystem (10) gemäß Anspruch 13, worin
das genannte zweite Speichermedium (18) weiter enthält einen ersten Schlüsseldaten-Speicherbereich (42c, 62), der die genannten ersten Schlüsseldaten speichert,
der genannte erste Controller (40) des genannten ersten Speichermediums (16) einen ersten Verschlüsselungsmodus aufweist und in der Lage ist, den genannten ersten Inhaltsmodus-Umschaltbefehl im genannten ersten Verschlüsselungsmodus auszuführen, und
der genannte zweite Controller (40) des genannten zweiten Speichermediums (18) den genannten ersten Verschlüsselungsmodus aufweist und einen zweiten Verschlüsselungsmodus, und in der Lage ist, den genannten ersten Inhaltsmodus-Umschaltbefehl im genannten ersten Entschlüsselungsmodus auszuführen durch Entschlüsselung des verschlüsselten ersten Inhaltsmodus-Umschaltbefehls unter Verwendung der genannten ersten Schlüsseldaten nach Empfang des genannten verschlüsselten ersten Inhaltsmodus-Umschaltbefehls von der genannten zweiten Informationsverarbeitungseinrichtung (14) und in der Lage ist, einen zweiten Inhaltsmodus-Umschaltbefehl im genannten zweiten Verschlüsselungsmodus auszuführen.

15. Informationsverarbeitungssystem (10) gemäß Anspruch 14, worin
das genannte erste Speichermedium (16) einen ersten sicheren Bereich (64) aufweist, der nur im genannten ersten Verschlüsselungsmodus zugänglich ist,
das genannte zweite Speichermedium (18) einen ersten sicheren Bereich (64) aufweist, der nur im genannten ersten Verschlüsselungsmodus zugänglich ist, und einen zweiten sicheren Bereich (72), der nur im genannten zweiten Verschlüsselungsmodus zugänglich ist, und die genannte zweite Informationsverarbeitungseinrichtung (14) einen ersten Verschlüsselungsmodus-Umschaltbefehl durch das genannte zweite Ausgabemittel (S35, S37, S39, S179, S181, S183) ausgibt, unabhängig davon, ob das angeschlossene Speichermedium (16,18) das genannte erste Speichermedium (16) oder das genannte zweite Speichermedium (18) ist, um die Daten vom ersten sicheren Bereich (64) zu lesen, und für den Fall, dass das angeschlossene Speichermedium (16,18) das genannte zweite Speichermedium (18) ist, dann den genannten zweiten Verschlüsselungsmodus-Umschaltbefehl durch das genannte zweite Ausgabemittel (S35, S37, S39, S179, S181, S183) ausgibt, um die Daten des genannten zweiten sicheren Bereichs (72) zu lesen und weiter den genannten zweiten Inhaltsmodus-Umschaltbefehl ausgibt.

16. Informationsverarbeitungssystem (10) gemäß Anspruch 15, worin das genannte zweite Ausgabemittel (S35, S37, S39, S179, S181, S183) für den Fall, dass das angeschlossene Speichermedium (16,18) das genannte zweite Speichermedium (18) ist, die Daten vom ersten sicheren Bereich (64) liest und dann das Einschalten oder das Abschalten der Energieversorgung des genannten zweiten Speichermediums (18) steuert oder den genannten zweiten Controller (40) zurück setzt.

17. Informationsverarbeitungssystem (10) gemäß Anspruch 1, worin
das genannte zweite Speichermedium (18) weiter einen Identifikationsinformations-Speicherbereich (60) aufweist, um Identifikationsinformation von sich selbst zu speichern, und
die genannte zweite Informationsverarbeitungseinrichtung (14) feststellt, ob oder ob nicht das angeschlossene Speichermedium (16,18) das genannte zweite Speichermedium (18) ist, abhängig vom Vorhandensein oder der Abwesenheit der genannten Identifikationsinformation.

18. Informationsverarbeitungssystem (10) gemäß Anspruch 17, worin
die genannte zweite Informationsverarbeitungseinrichtung (14) beim Start einen Lesebefehl für die genannte Identifikationsinformation ausgibt, die im genannten Identifikationsinformations-Speicherbereich (60) gespeichert ist, an das genannte erste Speichermedium (16) und das genannte zweite Speicher Informationsmedium (18), die an die genannte zweite Informationsverarbeitungseinrichtung (14) angeschlossen sind, und
der genannte zweite Controller (40) des genannten zweiten Speichermediums (18) beim Start zugänglich ist für den genannten Identifikationsinformations-Speicherbereich (60), aber nicht zugänglich ist für den ersten sicheren Bereich (64) und den zweiten sicheren Bereich (72).

19. Informationsverarbeitungssystem (10) gemäß Anspruch 1, worin der genannte erste Schlüsseldaten-Speicherbereich (42c, 62) und der genannte zweite Schlüsseldaten-Speicherbereich (42c, 70) von außen nicht zugänglich sind.

20. Informationsverarbeitungssystem (10) gemäß Anspruch 1, worin die genannte erste Informationsverarbeitungseinrichtung (12) und die genannte zweite Informationsverarbeitungseinrichtung (14) Schlüsseldaten erzeugen aus Verschlüsselungs-Schlüssel-Originaldaten, die vom genannten ersten Speichermedium (16) und dem genannten zweiten Speichermedium (18) gelesen werden und Verschlüsselungs-Erzeugungsdaten, die innerhalb der genannten ersten Informationsverarbeitungseinrichtung (12) und der genannten zweiten Informationsverarbeitungseinrichtung (14) gespeichert sind.

21. Informationsverarbeitungseinrichtung (14), die konfiguriert ist, um getrennt zu werden von einem ersten Speichermedium (16), das einen ersten Inhaltsdaten-Speicherbereich (42b, 66) zum Speichern erster Inhaltsdaten aufweist, und einem zweiten Speichermedium (18), das einen zweiten Inhaltsdaten-Speicherbereich (42b, 74) zum Speichern zweiter Inhaltsdaten aufweist, enthaltend:
ein Medium-Feststellungsmittel (S113) zum Feststellen, ob das genannte erste Speichermedium (16) oder das genannte zweite Medium (18) an die genannte Informationsverarbeitungseinrichtung angeschlossen ist;
ein erstes Ausgabemittel (S35, S37, S39) zum, wenn das genannte Medium-Feststellungsmittel feststellt, dass das genannte erste Speichermedium (16) angeschlossen ist, Verschlüsseln eines ersten Inhaltsmodus-Umschaltbefehls, um in einen ersten Inhaltsmodus umzuschalten, der Zugriff zu den genannten ersten Inhaltsdaten erlaubt, die im genannten ersten Inhaltsdaten-Speicherbereich (42b, 66) gespeichert sind, unter Verwendung erster Schlüsseldaten, und zum Ausgeben des verschlüsselten ersten Inhaltsmodus-Umschaltbefehls an das genannte erste Speichermedium (16);
ein erstes Empfangsmittel (S1, S7, S19, S21, S23, S31, 549, S51, S53, S61) zum Empfangen erster Lesedaten, die vom genannten ersten Speichermedium (16) ausgegeben werden als Antwort auf den ersten Inhaltsmodus-Umschaltbefehl, der vom genannten ersten Ausgabemittel (S35, S37, S39) ausgegeben wurde;
ein zweites Ausgabemittel (S35, S37, S39, S179, S181, S183) zum, wenn das genannte Medium-Feststellungsmittel (S113) feststellt, dass das genannte zweite Speichermedium (18) angeschlossen ist, Verschlüsseln eines zweiten Inhaltsmodus-Umschaltbefehls, um in einen zweiten Inhaltsmodus umzuschalten, der Zugriff zu den genannten zweiten Inhaltsdaten erlaubt, die im genannten zweiten Inhaltsdaten-Speicherbereich (42b, 74) gespeichert sind, unter Verwendung zweiter Schlüsseldaten, die sich von den genannten ersten Schlüsseldaten unterscheiden, und Ausgeben des verschlüsselten zweiten Inhaltsmodus-Umschaltbefehls an das genannte zweite Speichermedium (18); und
ein zweites Empfangsmittel (S19, S21, S23, S31, S49, S51, S53, S61, S101, S107, S121, S123, S125, S135, S145, S151, S163, S165, S167, S175, S193, S195, S197, S205) zum Empfangen zweiter Lesedaten, die vom genannten zweiten Speichermedium (18) ausgegeben werden als Antwort auf den zweiten Inhaltsmodus-Umschaltbefehl, der vom genannten zweiten Ausgabemittel ausgegeben wurde (S35, S37, S39, S179, S181, S183).

22. Informationsverarbeitungsverfahren einer Informationsverarbeitungseinrichtung (14), die konfiguriert ist, um von einem ersten Speichermedium (16) getrennt zu werden, das einen ersten Inhaltsdaten-Speicherbereich (42b, 66) aufweist, der mindestens erste Inhaltsdaten speichert, und die weiter konfiguriert ist, um von einem zweiten Speichermedium (18) getrennt zu werden, das den ersten Inhaltsdaten-Speicherbereich (42b, 66) und einen zweiten Inhaltsdaten-Speicherbereich (42b, 74) aufweist, der zweite Inhaltsdaten speichert, wobei das Informationsverarbeitungsverfahren die Schritte enthält:
(a) Feststellen, ob das genannte erste Speichermedium (16) oder das genannte zweite Medium (18) an die genannte Informationsverarbeitungseinrichtung (14) angeschlossen ist (S113);
(b) Verschlüsseln eines ersten Inhaltsmodus-Umschaltbefehls, um in einen ersten Inhaltsmodus umzuschalten, der Zugriff zu den genannten ersten Inhaltsdaten erlaubt, die im genannten ersten Inhaltsdaten-Speicherbereich (42b, 66) gespeichert sind, unter Verwendung erster Schlüsseldaten, und Ausgeben (S35, S37, S39) des verschlüsselten ersten Inhaltsmodus-Umschaltbefehls an das genannte erste Speichermedium (16), wenn der genannte Schritt (a) feststellt, dass das erste Speichermedium (16) angeschlossen ist;
(c) Empfangen erster Lesedaten, die vom genannten ersten Speichermedium (60) als Antwort auf den ersten Inhaltsmodus-Umschaltbefehl ausgegeben werden, der im Schritt (b) ausgegeben wurde (S1, S7, S19, S21, S23, S31, S49, S51, S53, S61); oder
(d) Verschlüsseln eines zweiten Inhaltsmodus-Umschaltbefehls, um in einen zweiten Inhaltsmodus umzuschalten, der Zugriff zu den genannten zweiten Inhaltsdaten erlaubt, die im genannten zweiten Inhaltsdaten-Speicherbereich (42b, 74) gespeichert sind, unter Verwendung zweiter Schlüsseldaten, die sich von den genannten ersten Schlüsseldaten unterscheiden, und Ausgeben (S35, S37, S39, S179, S181, S183) des verschlüsselten zweiten Inhaltsmodus-Umschaltbefehls an das genannte zweite Speichermedium (18), wenn der genannte Schritt (a) feststellt, dass das zweite Speichermedium (18) angeschlossen ist; und
(e) Empfangen zweiter Lesedaten, die vom genannten ersten (42b, 66) oder zweiten (42b, 74) Inhalts-Speicherbereich des genannten zweiten Speichermediums (18) ausgegeben werden als Antwort auf den zweiten Inhaltsmodus-Umschaltbefehl, der vom genannten Schritt (d) ausgegeben wurde (S19, S21, S23, S31, S49, S51, S53, S61, S101, S107, S121, S123, S125, S135, S145, S151, S163, S165, S167, S175, S193, S195, S197, S205).

23. Speichermedium (16,18), das ein Informationsverarbeitungsprogramm speichert, das Computerprogramm-Code enthält, um das Verfahren von Anspruch 22 auszuführen, wenn das Programm durch einen Computer einer Informationsverarbeitungseinrichtung gemäß Anspruch 21 ausgeführt wird.

## Revendications

1. Système de traitement de l'information (10) ayant un premier appareil de traitement de l'information (12) et un premier support de stockage (14) pouvant être connecté audit premier appareil de traitement de l'information (12) et en être déconnecté, **caractérisé en ce qu'**il comprend un deuxième appareil de traitement de l'information (14), qui est compatible avec ledit premier appareil de traitement de l'information (12) et peut être déconnecté avec ledit premier support de stockage (16), et un deuxième support de stockage (18) pouvant être connecté au moins audit deuxième appareil de traitement de l'information (14) et en être déconnecté, et étant différent dudit premier support de stockage (16), ledit premier appareil de traitement de l'information (12) comprenant :
un premier moyen émetteur (S35, S37, S39) pour crypter une instruction de passage en un premier mode de contenu, pour permettre un passage en un premier mode de contenu, permettant un accès aux données de contenu stockées dans ledit premier support de stockage (16) et ledit deuxième support de stockage (18) qui sont connectés audit premier appareil de traitement de l'information par utilisation de premières données de clés, et émettre ladite instruction de passage en un premier mode de contenu vers ledit premier support de stockage (16) et ledit deuxième support de stockage (18) ; et
un premier moyen récepteur (S1, S7, S19, S21, S23, S31, S49, S51, S53, S61) pour émettre une instruction de lecture vers ledit premier support de stockage (16) ou ledit deuxième support de stockage (18), qui est connecté audit premier appareil de traitement de l'information par exécution d'un premier programme prédéterminé, et recevoir les données lues obtenues en sortie dudit premier support de stockage (16) ou dudit deuxième support de stockage (18),
ledit premier support de stockage (16) comprenant :
une première zone de mémoire de données de clés (42c, 62) pour stocker lesdites premières données de clés ;
une première zone de mémoire de données de contenu (42b, 66) pour stocker les premières données de contenu ; et
un premier contrôleur (40) pour, quand l'instruction cryptée de passage en le premier mode de contenu, provenant dudit premier appareil de traitement de l'information (12) et dudit deuxième appareil de traitement de l'information (14) auxquels ledit premier support de stockage est connecté, est reçue, passer en ledit premier mode de contenu par décryptage de l'instruction cryptée de passage en le premier mode de contenu par utilisation desdites premières données de clés, et pour exécuter l'instruction décryptée de passage en le premier mode de contenu et pour, quand l'instruction de lecture, pour ce qui est de la zone de mémoire de premières données de contenu (42b, 66) est reçue dudit premier appareil de traitement de l'information (12) et du deuxième appareil de traitement de l'information (14) auxquels ledit premier support de stockage (16) est connecté, ne pas répondre à l'instruction de lecture avant le passage en ledit premier mode de contenu, et envoyer en sortie lesdites données de lecture vers ledit premier appareil de traitement de l'information (12) et ledit deuxième appareil de traitement de l'information (14) après passage en le premier mode de contenu,
ledit deuxième appareil de traitement de l'information (14) comprenant :
un moyen de détermination du support (S113), pour déterminer si le support de stockage connecté (16, 18) est ledit premier support de stockage (16) ou ledit deuxième support de stockage (18) ;
un deuxième moyen émetteur (S35, S37, S39, S179, S181, S183) pour, quand ledit moyen de détermination du support (S113) détermine qu'il s'agit dudit premier moyen de support (16), crypter ladite instruction de passage en le premier mode de contenu, pour passer en le premier mode de contenu par utilisation desdites premières données de clés, et émettre l'instruction cryptée de passage en le premier mode de contenu vers ledit premier support de stockage (16) et pour, quand ledit moyen de détermination du support (S113) détermine qu'il s'agit dudit deuxième support de stockage (18), crypter une instruction de passage en un deuxième mode de contenu, pour passer en le deuxième mode de contenu par utilisation de deuxièmes données de clés différentes desdites premières données de clés, et émettre l'instruction cryptée de passage en un deuxième mode de contenu vers ledit deuxième support de stockage (18) ; et
un deuxième moyen récepteur (S19, S21, S23, S31, S49, S51, S53, S61, S101, S107, S121, S123, S125, S135, S145, S151, S163, S165, S167, S175, S193, S195, S197, S205) pour émettre une instruction de lecture vers ledit premier support de stockage (16) ou ledit deuxième support de stockage (18), qui est connecté audit deuxième appareil de traitement de l'information, par exécution d'un deuxième programme prédéterminé, différent dudit premier programme prédéterminé, et recevoir les données lues sortant dudit premier support de stockage (16) ou dudit deuxième support de stockage (18), et
ledit deuxième support de stockage (18) comprenant :
une zone de mémoire des deuxièmes données de clés (42c, 70) pour stocker lesdites deuxièmes données de clés ;
une zone de mémoire des deuxièmes données de contenu (42b, 74) pour stocker les deuxièmes données de contenu ; et
un deuxième contrôleur (40) pour, quand l'instruction cryptée de passage du deuxième mode de contenu est reçue dudit deuxième appareil de traitement de l'information (14) auquel ledit deuxième support de stockage (18) est connecté, passer en ledit deuxième mode de contenu par décryptage de ladite instruction cryptée de passage en le deuxième mode de contenu, par utilisation desdites deuxièmes données de clés, et exécuter l'instruction décryptée de passage en le deuxième mode, et pour, quand l'instruction de lecture, pour ce qui est de ladite zone de mémoire des deuxièmes données de contenu, est reçue dudit deuxième appareil de traitement de l'information (14) auquel ledit deuxième support de stockage (18) est connecté, ne pas répondre à l'instruction de lecture avant le passage en le deuxième mode de contenu, et envoyer en sortie les données lues vers ledit deuxième appareil de traitement de l'information (14) après passage en le deuxième mode de contenu.

2. Système de traitement de l'information (10) selon la revendication 1, dans lequel
ledit deuxième support de stockage (18) peut lui aussi être connecté audit premier appareil de traitement de l'information (12) et comprend en outre une zone de mémoire des premières données de clés (42c, 62) pour stocker lesdites premières données de clés, ledit premier moyen émetteur (S35, S37, S39) dudit premier appareil de traitement de l'information (12) émet une instruction de passage en le premier mode de cryptage pour passer en le premier mode de cryptage pour crypter et transmettre et recevoir une instruction et des données avec ledit premier support de stockage (16) et ledit deuxième support de stockage (18), puis émet ladite instruction de passage en le premier mode de contenu,
ledit premier contrôleur (40) dudit premier support de stockage (16) passe en ledit premier mode de cryptage par exécution de ladite instruction de passage en le premier mode de cryptage et passe en ledit premier mode de contenu par décryptage de l'instruction cryptée reçue de passage en le premier mode de contenu par utilisation desdites premières données de clés et exécution de l'instruction décryptée de passage en le premier mode de contenu dans ledit premier mode de cryptage,
ledit deuxième moyen émetteur (S35, S37, S39, S179, S181, S183) dudit deuxième appareil de traitement de l'information (14) émet l'instruction de passage en le premier mode de cryptage pour passer en ledit premier mode de cryptage quand ledit premier support de stockage (16) est connecté audit deuxième appareil de traitement de l'information (14), et émet une instruction de passage en le deuxième mode de cryptage pour passer en le deuxième mode de cryptage quand ledit deuxième support de stockage (18) est connecté audit deuxième appareil de traitement de l'information (14),
ledit deuxième contrôleur (40) dudit deuxième support de stockage (18) passe en ledit premier mode de cryptage par réception et exécution de ladite instruction de passage en le premier mode de cryptage, passe en ledit premier mode de contenu par décryptage de l'instruction cryptée reçue de passage en le premier mode de contenu, par utilisation desdites premières données de clés, et exécution de l'instruction décryptée de passage en le premier mode de contenu dans ledit premier mode de cryptage, ou passe en ledit deuxième mode de cryptage par réception et exécution de ladite instruction de passage en le deuxième mode de cryptage, et passe en ledit deuxième mode de contenu par décryptage de l'instruction cryptée reçue de passage en le deuxième mode de contenu par utilisation desdites deuxièmes données de clés et exécution de l'instruction décryptée de passage en le deuxième mode de contenu dans ledit deuxième mode de cryptage.

3. Système de traitement de l'information (10) selon la revendication 2, dans lequel
ledit premier appareil de traitement de l'information (12) émet ladite instruction de passage en le premier mode de contenu pour passer en ledit premier mode de contenu,
ledit deuxième appareil de traitement de l'information (14) émet ladite instruction de passage en le premier mode de contenu pour passer en ledit premier mode de contenu quand ledit premier support de stockage (16) est connecté audit deuxième appareil de traitement de l'information (14), ou émet ladite instruction de passage en le deuxième mode de contenu pour passer en ledit deuxième mode de contenu quand ledit deuxième support de stockage (18) est connecté audit deuxième appareil de traitement de l'information (14), et
ledit deuxième contrôleur (40) dudit deuxième support de stockage (18), quand ladite instruction de passage en le premier mode de contenu est reçue, passe en ledit premier mode de contenu par décryptage de ladite instruction de passage en le premier mode de contenu par utilisation desdites premières données de clés et exécution de l'instruction décryptée de passage en le premier mode de contenu, ou, quand ladite instruction de passage en le deuxième mode de contenu est reçue, passe en ledit deuxième mode de contenu par décryptage de ladite instruction de passage en le deuxième mode de contenu par utilisation desdites deuxièmes données de clés et exécution de l'instruction décryptée de passage en le deuxième mode de contenu.

4. Système de traitement de l'information (10) selon la revendication 2 ou 3, dans lequel ladite zone de mémoire des premières données de clés (42c, 62) dudit premier support de stockage (16) et ladite zone de mémoire des premières données de clés (42c, 62) dudit deuxième support de stockage (18), sont positionnées sur une adresse de démarrage identique.

5. Système de traitement de l'information (10) selon l'une quelconque des revendications 2 à 4, dans lequel
les deuxièmes données de contenu contiennent des troisièmes données de contenu et des quatrièmes données de contenu,
ladite zone de mémoire des deuxièmes données de contenu (42b, 74) dudit deuxième support de stockage (18) comprend une zone de mémoire des troisièmes données de contenu (66) pour stocker les troisièmes données de contenu et une zone de mémoire des quatrièmes données de contenu (74) pour stocker les quatrièmes données de contenu, et
ledit deuxième contrôleur (40), quand ladite instruction de passage en le premier mode de contenu est reçue, passe en ledit premier mode de contenu par décryptage de ladite instruction de passage en le premier mode de contenu par utilisation desdites premières données de clés et exécution de l'instruction décryptée de passage en le premier mode de contenu, pour rendre lisible ladite zone de mémoire des troisièmes données de contenu (66), ou, quand ladite instruction de passage en le deuxième mode de contenu est reçue, passe en ledit deuxième mode de contenu par décryptage de ladite instruction de passage en le deuxième mode de contenu par utilisation desdites deuxièmes données de clés et exécution de l'instruction décryptée de passage en le deuxième mode de contenu, pour rendre lisible ladite zone de mémoire des quatrièmes données de contenu (74).

6. Système de traitement de l'information (10) selon la revendication 5, dans lequel
ledit deuxième contrôleur (40) dudit deuxième support de stockage (18) rend lisibles en ledit deuxième mode de contenu ladite zone de mémoire des troisièmes données de contenu (66) et ladite zone de mémoire des quatrièmes données de contenu (74).

7. Système de traitement de l'information (10) selon la revendication 5 ou 6, dans lequel
ladite zone de mémoire des troisièmes données de contenu (66) dudit deuxième support de stockage (18) stocke un premier programme exécutable par ledit premier appareil de traitement de l'information (12), et
ladite zone de mémoire des quatrièmes données de contenu (74) dudit deuxième support de stockage (18) stocke un deuxième programme qui n'est pas exécutable par ledit premier appareil de traitement de l'information (12) et est exécutable par ledit deuxième appareil de traitement de l'information (14).

8. Système de traitement de l'information (10) selon l'une quelconque des revendications 5 à 7, dans lequel ladite zone de mémoire des premières données de contenu (42b, 66) dudit premier support de stockage (16) et ladite zone de mémoire des troisièmes données de stockage (66) dudit deuxième support de stockage (18), sont positionnées sur une adresse de démarrage identique.

9. Système de traitement de l'information (10) selon la revendication 8, dans lequel
ladite zone de mémoire des premières données de contenu (42b, 66) dudit premier support de stockage (16) est une zone de mémoire située après une première adresse et vers l'avant,
ladite zone de mémoire des troisièmes données de contenu (66) dudit deuxième support de stockage (18) est une zone de mémoire située après ladite première adresse, vers une deuxième adresse, et
ladite zone de mémoire des quatrièmes données de contenu (74) dudit deuxième support de stockage (18) est une zone de mémoire située après ladite deuxième adresse vers l'avant,
dans lequel ladite deuxième adresse est variable.

10. Système de traitement de l'information (10) selon la revendication 9, dans lequel l'information de ladite deuxième adresse est stockée dans une zone prédéterminée (60) dudit deuxième support de stockage (18).

11. Système de traitement de l'information (10) selon l'une quelconque des revendications 5 à 10, dans lequel ledit deuxième contrôleur (40) dudit deuxième appareil de traitement de l'information (14) accepte une première instruction de lecture en ledit premier mode de contenu, ou accepte une deuxième instruction de lecture en ledit deuxième mode de contenu.

12. Système de traitement de l'information (10) selon la revendication 11, dans lequel l'instruction de lecture en ledit premier mode de contenu dudit premier contrôleur (40) dudit premier support de stockage (16) et l'instruction de lecture en ledit premier mode de contenu dudit deuxième contrôleur (40) dudit deuxième support de stockage (18), sont identiques.

13. Système de traitement de l'information (10) selon la revendication 1, dans lequel
ledit premier contrôleur (40) dudit premier support de stockage (16) est démarré en mode de non-cryptage n'exigeant pas de décryptage de l'instruction reçue, puis passe en un mode de cryptage en réponse à une instruction provenant dudit premier appareil de traitement de l'information (12) auquel ledit premier support de stockage (16) est connecté, et reçoit l'instruction cryptée de passage en le premier mode de contenu à partir dudit premier appareil de traitement de l'information (12) en ledit mode de cryptage,
ledit deuxième contrôleur (40) dudit deuxième support de stockage (18) est démarré en mode de non-cryptage n'exigeant pas de décryptage de l'instruction reçue, puis passe en un mode de cryptage en réponse à une instruction provenant dudit deuxième appareil de traitement de l'information (14) auquel ledit deuxième support de stockage (18) est connecté, et reçoit l'instruction cryptée de passage en le deuxième mode de contenu à partir dudit deuxième appareil de traitement de l'information (14) en ledit mode de cryptage.

14. Système de traitement de l'information (10) selon la revendication 13, dans lequel
ledit deuxième support de stockage (18) comprend en outre une zone de mémoire des premières données de clés (42c, 62), qui stocke lesdites premières données de clés,
ledit premier contrôleur (40) dudit premier support de stockage (16) a un premier mode de cryptage, et est capable d'exécuter ladite instruction de passage en le premier mode de contenu en ledit premier mode de cryptage, et
ledit deuxième contrôleur (40) dudit deuxième support de stockage (18) a ledit premier mode de cryptage et un deuxième mode de cryptage, et est capable d'exécuter ladite instruction de passage en le premier mode de contenu en ledit premier mode de cryptage par décryptage de l'instruction cryptée de passage en le premier mode de contenu par utilisation desdites premières données de clés après réception de ladite instruction cryptée de passage en le premier mode de contenu provenant dudit deuxième appareil de traitement de l'information (14), et est capable d'exécuter l'instruction de passage en le deuxième mode de contenu en ledit deuxième mode de cryptage.

15. Système de traitement de l'information (10) selon la revendication 14, dans lequel
ledit premier support de stockage (16) a une première zone sécurisée (64) accessible uniquement en ledit premier mode de cryptage,
ledit deuxième support de stockage (18) a ladite première zone sécurisée (64), accessible seulement en ledit premier mode de cryptage, et une deuxième zone sécurisée (72), accessible seulement en ledit deuxième mode de cryptage, et ledit deuxième appareil de traitement de l'information (14) émet ladite instruction de passage en le premier mode de cryptage par ledit deuxième moyen émetteur (S35, S37, S39, S179, S181, S183), que le support de stockage connecté (16, 18) soit ledit premier support de stockage (16) ou le deuxième support de stockage (18) pour lire les données de ladite première zone sécurisée (64), et, dans un cas dans lequel le support de stockage connecté (16, 18) est ledit deuxième support de stockage (18), émet alors ladite instruction de passage en le deuxième mode de cryptage par ledit deuxième moyen émetteur (S35, S37, S39, S179, S181, S183), pour lire les données de ladite deuxième zone sécurisée (72), et en outre émet ladite instruction de passage en le deuxième mode de contenu.

16. Système de traitement de l'information (10) selon la revendication 15, dans lequel ledit deuxième moyen émetteur (S35, S37, S39, S179, S181, S183), dans le cas dans lequel le support de stockage connecté (16, 18) est ledit deuxième support de stockage (18), lit les données de ladite première zone sécurisée (64), puis commande la mise en circuit ou la mise hors-circuit de l'alimentation dudit deuxième support de stockage (18), ou remet à l'état initial ledit deuxième contrôleur (40).

17. Système de traitement de l'information (10) selon la revendication 1, dans lequel
ledit deuxième support de stockage (18) comprend en outre une zone de mémoire d'information d'identification (60) pour stocker l'information d'identification qui lui correspond, et
ledit deuxième appareil de traitement de l'information (14) détermine si le support de stockage connecté (16, 18) est ou non ledit deuxième support de stockage (18), selon la présence ou l'absence de ladite information d'identification.

18. Système de traitement de l'information (10) selon la revendication 17, dans lequel
ledit deuxième appareil de traitement de l'information (14) émet, au démarrage, une instruction de lecture de ladite information d'identification stockée dans ladite zone de mémoire de l'information d'identification (60), vers ledit premier support de stockage (16) et ledit deuxième support de stockage (18), qui sont connectés audit deuxième appareil de traitement de l'information (14), et
ledit deuxième contrôleur (40) dudit deuxième support de stockage (18) est, au démarrage, accessible pour ladite zone de mémoire de l'information d'identification (60) mais inaccessible pour ladite première zone sécurisée (64) et ladite deuxième zone sécurisée (72).

19. Système de traitement de l'information (10) selon la revendication 1, dans lequel ladite zone de mémoire des premières données de clés (42c, 62) et ladite zone de mémoire des deuxièmes données de clés (42c, 70) sont inaccessibles de l'extérieur.

20. Système de traitement de l'information (10) selon la revendication 1, dans lequel ledit premier appareil de traitement de l'information (12) et ledit deuxième appareil de traitement de l'information (14) génèrent des données de clés à partir des données originales de clés de cryptage lues à partir dudit premier support de stockage (16) et dudit support de stockage (18), et des données de génération de cryptage stockées à l'intérieur dudit premier appareil de traitement de l'information (12) et dudit deuxième appareil de traitement de l'information (14).

21. Appareil de traitement de l'information (14), configuré de façon à pouvoir être déconnecté avec un premier support de stockage (16) ayant une zone de mémoire des premières données de contenu (42b, 66) stockant les premières données de contenu, et un deuxième support de stockage (18) ayant une zone de mémoire des deuxièmes données de contenu (42b, 74) stockant les deuxièmes données de contenu, comprenant :
un moyen de détermination du support (S113), pour déterminer si c'est ledit premier support de stockage (16) qui est connecté ou ledit deuxième support (18) qui est connecté audit appareil de traitement de l'information (14) ;
un premier moyen émetteur (S35, S37, S39) pour, quand le moyen de détermination du support détermine que c'est ledit premier support de stockage (16) qui est connecté, crypter une instruction de passage en le premier mode de contenu pour passer en le premier mode de contenu, permettant un accès auxdites premières données de contenu stockées dans ladite zone de mémoire des premières données de contenu (42b, 66) par utilisation des premières données de clés, et émettre l'instruction cryptée de passage en le premier mode de contenu vers ledit premier support de stockage (16) ; un premier moyen récepteur (S1, S7, S19, S21, S23, S31, S49, S51, S53, S61) pour recevoir les premières données lues obtenues en sortie dudit premier support de stockage (16) en réponse à l'instruction de passage en le premier mode de contenu émise par ledit premier moyen émetteur (S35, S37, S39) ;
un deuxième moyen émetteur (S35, S37, S39, S179, S181, S183) pour, quand ledit moyen de détermination du support (S113) détermine que c'est ledit deuxième support de stockage (18) qui est connecté, crypter une instruction de passage en le deuxième mode de contenu pour passer en le deuxième mode de contenu, permettant l'accès auxdites deuxièmes données de contenu stockées dans ladite zone de mémoire des deuxièmes données de contenu (42b, 74) par utilisation de deuxièmes données de clés, différentes desdites premières données de clés, et émettre l'instruction cryptée de passage en le deuxième mode de contenu vers ledit deuxième support de stockage (18) ; et
un deuxième moyen récepteur (S19, S21, S23, S31, S49, S51, S53, S61, S101, S107, S121, S123, S125, S135, S145, S151, S163, S165, S167, S175, S193, S195, S197, S205) pour recevoir des deuxièmes données lues obtenues en sortie dudit deuxième support de stockage (18) en réponse à l'instruction de passage en le deuxième mode de contenu émise par ledit deuxième moyen émetteur (S35, S37, S39, S179, S181, S183).

22. Procédé de traitement de l'information d'un appareil de traitement de l'information (14) configuré de façon à être déconnecté avec un premier support de stockage (16) ayant une zone de mémoire des premières données de contenu (42b, 66) stockant au moins des premières données de contenu, et configuré en outre pour pouvoir être déconnecté avec un deuxième support de stockage (18) ayant la zone de mémoire des premières données de contenu (42b, 66) et une zone de mémoire des deuxièmes données de contenu (42b, 74) stockant les deuxièmes données de contenu, le procédé de traitement de l'information comprenant les étapes de :
(a) détermination si c'est ledit premier support de stockage (16) qui est connecté ou le deuxième support de stockage (18) qui est connecté audit appareil de traitement de l'information (14) (S113) ;
(b) cryptage d'une instruction de passage en le premier mode de contenu pour passer en le premier mode de contenu permettant l'accès auxdites premières données de contenu stockées dans ladite zone de mémoire des premières données de contenu (42b, 66) par utilisation de premières données de clés, et émission (S35, S37, S39) de l'instruction cryptée de passage en le premier mode de contenu vers ledit premier support de stockage (16) quand ladite étape (a) détermine que c'est ledit premier support de stockage (16) qui est connecté ;
(c) réception des premières données lues obtenues en sortie dudit premier support de stockage (16) en réponse à l'instruction de passage en le premier mode de contenu émise par ladite étape (b) (S1, S7, S19, S21, S23, S31, S49, S51, S53, S61) ; ou
(d) cryptage d'une instruction de passage en le deuxième mode de contenu pour passer en un deuxième mode de contenu, permettant l'accès auxdites deuxièmes données de contenu stockées dans ladite zone de mémoire des deuxièmes données de contenu (42b, 74) par utilisation de deuxièmes données de clés différentes desdites premières données de clés, et émission (S35, S37, S39, S179, S181, S183) de l'instruction cryptée de passage en le deuxième mode de contenu vers ledit deuxième support de stockage (18) quand ladite étape (a) détermine que c'est ledit deuxième support de stockage (18) qui est connecté ; et
(e) réception de deuxièmes données lues obtenues en sortie de ladite zone de mémoire du premier contenu (42b, 66) ou du deuxième contenu (42b, 74) dudit deuxième support de stockage (18) en réponse à l'instruction de passage en le deuxième mode de contenu émise par ladite étape (d) (S19, S21, S23, S31, S49, S51, S53, S61, S101, S107, S121, S123, S125, S135, S145, S151, S163, S165, S167, S175, S193, S195, S197, S205).

23. Support de stockage (16, 18) stockant un programme de traitement de l'information comprenant un code de programme informatique pour exécuter le procédé de la revendication 22 quand le programme est exécuté par l'ordinateur d'un appareil de traitement de l'information selon la revendication 21.
